# EUROPEAN PATENT SPECIFICATION

(11) **EP 4 396 687 B1**
(45) Date of publication and mention of the grant of the patent: **04.11.2026**
(21) Application number: 22753967.3
(22) Date of filing: 20.07.2022
(51) Int. Cl.: G06F 12/1009, G06F 12/0808

(54) **SYSTEM AND METHODS FOR INVALIDATING TRANSLATION INFORMATION IN CACHES**
SYSTEM UND VERFAHREN ZUM UNGÜLTIGMACHEN VON ÜBERSETZUNGSINFORMATIONEN IN CACHESPEICHERN
SYSTÈME ET PROCÉDÉS POUR INVALIDER DES INFORMATIONS DE CONVERSION DANS DES MÉMOIRES CACHES

(30) Priority: 02.09.2021 US 202163240236 P; 11.10.2021 US 202163254475 P; 18.02.2022 US 202217675785
(43) Date of publication of application: 10.07.2024
(73) Proprietor: QUALCOMM INCORPORATED, San Diego, California 92121-1714 (US)
(72) Inventor: BLASCO, Conrado, San Diego, California 92121 (US); MONTERO, Adrian, San Diego, California 92121 (US); KITCHIN, Paul, San Diego, California 92121 (US); KANAPATHIPILLAI, Pradeep, San Diego, California 92121 (US); SANJELIWALA, Huzefa, San Diego, California 92121 (US)
(74) Representative: Klang, Alexander H.
(86) International application number: PCT/US2022/073928
(87) International publication number: WO 2023/034662

(56) References cited:
- GB-A- 2 586 984
- US-A1- 2015 242 319
- US-A1- 2020 167 292
- US-A1- 2021 064 528
- US-B2- 9 619 387
- ANONYMOUS: "ARM® System Memory Management Unit Architecture Specification, SMMU architecture version 3.0 and version 3.1", ARM® SYSTEM MEMORY MANAGEMENT UNIT ARCHITECTURE SPECIFICATION, SMMU ARCHITECTURE VERSION 3.0 AND VERSION 3.1, 1 January 2016 (2016-01-01), US, pages 1 - 443, XP055574663, Retrieved from the Internet <URL:http://docs-api-peg.northeurope.cloudapp.azure.com/assets/ihi0070/a/IHI_0070A_SMMUv3.pdf>

## Description

### RELATED APPLICATIONS

This application claims priority to U.S. Provisional Patent Application No. 63/240,236, titled "System and Methods for Invalidating Translation Information in Caches," filed on September 2, 2021, and U.S. Provisional Patent Application No. 63/254,475, titled "System and Methods for Invalidating Translation Information in Caches," filed on October 11, 2021.

This application also claims priority to U.S. Patent Application No. 17/675,785, titled "System and Methods for Invalidating Translation Information in Caches," filed on February 18, 2022.

### TECHNICAL FIELD

This application relates generally to microprocessor technology including, but not limited to, methods, systems, and devices for controlling execution of invalidation instructions in translation caches associated with a plurality of processors executing virtual machine(s).

### BACKGROUND

Caching improves computer performance by keeping recently used or often used data items, such as references to physical addresses of often used data, in caches that are faster to access compared to physical memory stores. As new information is fetched from physical memory stores or caches, caches are updated to store the newly fetched information to reflect current and/or anticipated data needs. However, a computer system that hosts a one or more virtual machines, may store information related to functions or applications executed at each virtual machine in different caches across the computer system. When a virtual machine is shut down, or when an application is closed on a virtual machine, the computer system sends in response an invalidation instruction to remove all cached entries belonging to the closed application or the shutdown virtual machine. Since the cache entries may be stored in any cache within the computer system, the invalidation instructions must be propagated and executed at each cache within the computer system, a high latency process. Additionally, a cache cannot be accessed while the invalidation instructions are executed at the cache, leading to further latency and disruption in service for users of the computer system.

As such, it would be highly desirable to provide an electronic device or electronic system that manages and executes cache invalidation instructions efficiently for a processor cluster having multiple processors.
Attention is drawn to document US 2021/064528 A1 which relates to a data processing apparatus. Cache circuitry caches data, the data being indexed according to execution contexts of processing circuitry. Receive circuitry receives invalidation requests each referencing a specific execution context in the execution contexts. Invalidation circuitry invalidates at least some of the data in the cache circuitry and filter circuitry filters the invalidation requests based on at least one condition and, when the condition is met, causes the invalidation circuitry to invalidate the data in the cache circuitry.

### SUMMARY

The present invention is defined by the appended independent claims. Further embodiments are defined by the appended dependent claims. Various implementations of systems, methods and devices within the scope of the appended claims each have several aspects, no single one of which is solely responsible for the attributes described herein. Without limiting the scope of the appended claims, after considering this disclosure, and particularly after considering the section entitled "Detailed Description" one will understand how the aspects of some implementations are used to control and execute invalidation instructions at a computer system that includes plurality of processors using bloom filters (and in some instances, splinter filters) associated with each cache in the computer system. In some implementations, a respective bloom filter associated with a respective cache in the computer system is queried to determine whether or not the cache stores a cache entry for a virtual machine, an address space, or a virtual address identified as part of the invalidation instructions. If the respective Bloom filter does not indicate that the respective cache stores a cache entry corresponding to any of a virtual machine, an address space, or a virtual address identified as part of the invalidation instructions, the invalidation instructions are not executed at the respective cache. In contrast, if the respective Bloom filter indicates that the respective cache stores a cache entry corresponding to any of a virtual machine, an address space, or a virtual address identified as part of the invalidation instructions, the invalidation instructions are executed at the respective cache.

In accordance with some implementations, an electronic device includes a plurality of processors that are configured to execute one or more virtual machines. A respective processor of the plurality of processors is associated with a first translation cache and one or more filters corresponding to the first translation cache. In some implementations, the one or more filters include a Bloom filter configured to track entries in the respective translation cache. In some implementations, the Bloom filter includes a virtual machine identifier (VMID) filter. In some implementations, the one or more filters includes a splinter filter in addition to the Bloom filter. The respective processor is configured to receive a translation invalidation instruction corresponding to a request to invalidate one or more entries in the first translation cache. In accordance with a determination that the translation invalidation instruction satisfies translation invalidation filtering criteria that include a requirement that the translation invalidation instruction specifies a respective VMID, the respective processor is configured to: query the VMID filter associated with the first translation cache to determine whether the respective VMID is stored in the VMID filter and, in accordance with a determination that the VMID filter indicates that the respective VMID is not stored in the VMID filter, forgo executing the translation invalidation instruction.

In accordance with some implementations, an electronic device includes a plurality of processors that are configured to execute one or more virtual machines. A respective processor of the plurality of processors is associated with a first translation cache and one or more filters corresponding to the first translation cache. The one or more filters include: a global identifier filter that is indicative of one or more global entries stored in the first translation cache; and an address space identifier filter that is indicative of one or more address spaces for which at least one entry is stored in the first translation cache. The respective processor is configured to: receive a translation invalidation instruction corresponding to a request to invalidate one or more entries in the first translation cache that are associated with a first virtual address identifier and a first address space identifier; and in response to receiving the translation invalidation instruction: in accordance with a determination that the translation invalidation instruction satisfies translation invalidation filtering criteria, which are satisfied in accordance with a determination that the global identifier filter indicates that the first translation cache does not store a global entry associated with the first virtual address identifier and in accordance with a determination that the address space identifier filter indicates that the first translation cache does not store an entry corresponding to the first address space identifier, forgo executing the translation invalidation instruction. The respective processor is further configured to, in response to receiving the translation invalidation instruction: in accordance with a determination that the translation invalidation instruction does not satisfy the translation invalidation filtering criteria, execute the translation invalidation instruction on the first translation cache.

A method of controlling and executing translation invalidation instructions and a non-transitory computer readable storage medium of claim storing one or more programs further include instructions for executing the translation invalidation instructions are also described herein.

These illustrative embodiments and implementations are mentioned not to limit or define the disclosure, but to provide examples to aid understanding thereof. Additional embodiments are discussed in the Detailed Description, and further description is provided there. Other implementations and advantages may be apparent to those skilled in the art in light of the descriptions and drawings in this specification.

### BRIEF DESCRIPTION OF THE DRAWINGS

Figure 1 is a block diagram of an example system module in a typical electronic device, in accordance with some implementations.
Figure 2 is a block diagram of an example electronic device having one or more processing clusters, in accordance with some implementations.
Figure 3A illustrates a block diagram of a hypervisor for hosting virtual machines, in accordance with some implementations.
Figure 3B illustrates a method of executing invalidation instructions, in accordance with some implementations.
Figure 4A illustrates a flowchart for executing invalidation instructions that include a virtual machine identifier, in accordance with some implementations.
Figure 4B illustrates a flowchart for executing invalidation instructions that include an address space identifier, in accordance with some implementations.
Figures 4C - 4D illustrate flowcharts for executing invalidation instructions that include a virtual address identifier, in accordance with some implementations.
Figures 5A - 5D illustrate a flow chart of an example method for executing invalidation instructions, in accordance with some implementations.
Figure 6 illustrates a flow chart of an example method for executing a translation invalidation instruction, in accordance with some implementations.

For a better understanding of the various described implementations, reference should be made to the Detailed Description below, in conjunction with the following drawings in which like reference numerals refer to corresponding parts throughout the figures. Like reference numerals refer to corresponding parts throughout the drawings.

### DESCRIPTION OF IMPLEMENTATIONS

Reference will now be made in detail to specific embodiments, examples of which are illustrated in the accompanying drawings. In the following detailed description, numerous non-limiting specific details are set forth in order to assist in understanding the subject matter presented herein. But it will be apparent to one of ordinary skill in the art that various alternatives may be used without departing from the scope of claims and the subject matter may be practiced without these specific details.

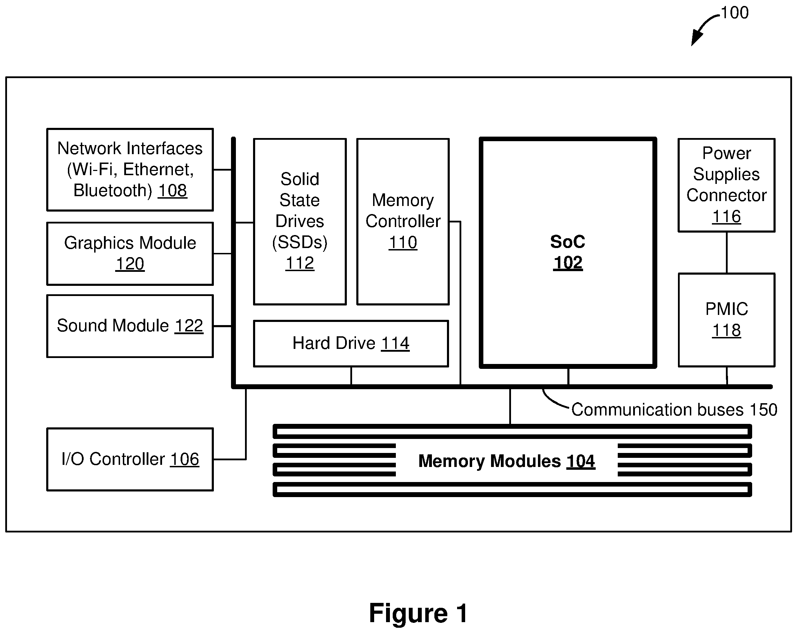

Figure 1 is a block diagram of an example system module 100 in a typical electronic device in accordance with some implementations. The system module 100 in this electronic device includes at least a system on a chip (SoC) 102, memory modules 104 for storing programs, instructions and data, an input/output (I/O) controller 106, one or more communication interfaces such as network interfaces 108, and one or more communication buses 150 for interconnecting these components. In some implementations, the I/O controller 106 allows SoC 102 to communicate with an I/O device (e.g., a keyboard, a mouse or a track-pad) via a universal serial bus interface. In some implementations, the network interfaces 108 includes one or more interfaces for Wi-Fi, Ethernet and Bluetooth networks, each allowing the electronic device to exchange data with an external source, e.g., a server or another electronic device. In some implementations, the communication buses 150 include circuitry (sometimes called a chipset) that interconnects and controls communications among various system components included in system module 100.

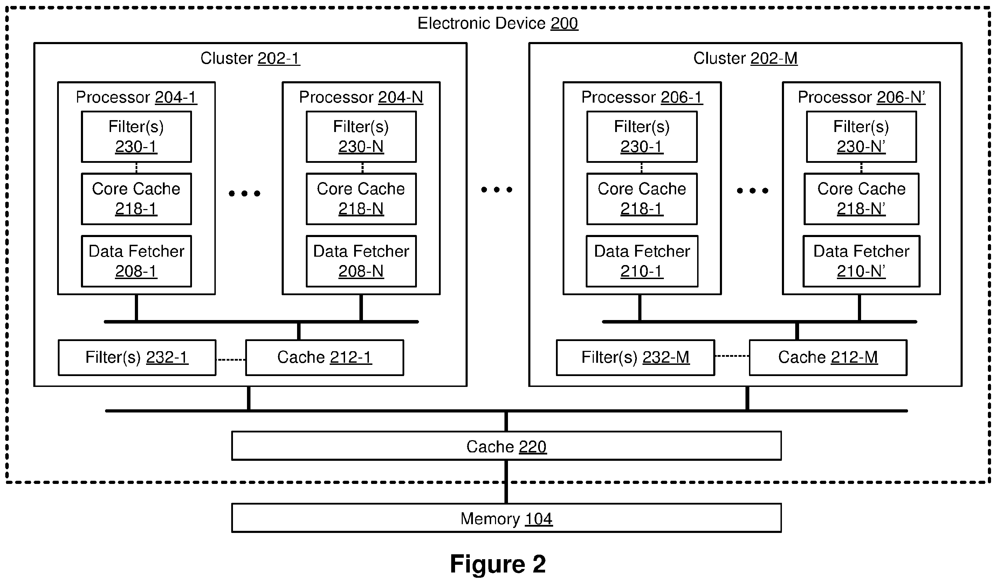

In some implementations, memory modules 104 (e.g., memory 104 in Figure 2) include high-speed random access memory, such as DRAM, SRAM, DDR RAM or other random access solid state memory devices. In some implementations, memory modules 104 include non-volatile memory, such as one or more magnetic disk storage devices, optical disk storage devices, flash memory devices, or other non-volatile solid state storage devices. In some implementations, memory modules 104, or alternatively the non-volatile memory device(s) within memory modules 104, include a non-transitory computer readable storage medium. In some implementations, memory slots are reserved on system module 100 for receiving memory modules 104. Once inserted into the memory slots, memory modules 104 are integrated into system module 100.

In some implementations, the system module 100 further includes one or more components selected from:
- a memory controller 110 that controls communication between SoC 102 and memory components, including memory modules 104, in electronic device, including controlling memory management unit (MMU) line replacement (e.g., cache entry replacement, cache line replacement) in a cache in accordance with a cache replacement policy;
- solid state drives (SSDs) 112 that apply integrated circuit assemblies to store data in the electronic device, and in many implementations, are based on NAND or NOR memory configurations;
- a hard drive 114 that is a conventional data storage device used for storing and retrieving digital information based on electromechanical magnetic disks;
- a power supply connector 116 that is electrically coupled to receive an external power supply;
- power management integrated circuit (PMIC) 118 that modulates the received external power supply to other desired DC voltage levels, e.g., 5V, 3.3V or 1.8V, as required by various components or circuits (e.g., SoC 102) within electronic device;
- a graphics module 120 that generates a feed of output images to one or more display devices according to their desirable image/video formats; and
- a sound module 122 that facilitates the input and output of audio signals to and from the electronic device under control of computer programs.

It is noted that the communication buses 150 also interconnect and control communications among various system components including components 110-122.

Further, one skilled in the art knows that other non-transitory computer readable storage media can be used, as new data storage technologies are developed for storing information in the non-transitory computer readable storage media in the memory modules 104 and in SSDs 112. These new non-transitory computer readable storage media include, but are not limited to, those manufactured from biological materials, nanowires, carbon nanotubes and individual molecules, even though the respective data storage technologies are currently under development and yet to be commercialized.

In some implementations, the SoC 102 is implemented on an integrated circuit that integrates one or more microprocessors or central processing units, memory, input/output ports and secondary storage on a single substrate. The SoC 102 is configured to receive one or more internal supply voltages provided by the PMIC 118. In some implementations, both the SoC 102 and the PMIC 118 are mounted on a main logic board, e.g., on two distinct areas of the main logic board, and electrically coupled to each other via conductive wires formed in the main logic board. As explained above, this arrangement introduces parasitic effects and electrical noise that could compromise performance of the SoC, e.g., cause a voltage drop at an internal voltage supply. Alternatively, in some implementations, the SoC 102 and the PMIC 118 are vertically arranged in an electronic device, such that they are electrically coupled to each other via electrical connections that are not formed in the main logic board. Such vertical arrangement of the SoC 102 and the PMIC 118 can reduce a length of electrical connections between SoC 102 and the PMIC 118 and avoid performance degradation caused by the conductive wires of the main logic board. In some implementations, vertical arrangement of the SoC 102 and the PMIC 118 is facilitated in part by integration of thin film inductors in a limited space between SoC 102 and the PMIC 118.

Figure 2 is a block diagram of an example electronic device 200 having one or more processing clusters 202 (e.g., first processing cluster 202-1, Mth processing cluster 202-M), in accordance with some implementations. In some implementations, the processing clusters 202 are implemented on one SoC 102. In some implementations, the processing clusters 202 are distributed across multiple SoCs. Electronic device 200 further includes a cache 220 and a memory 104 in addition to processing clusters 202. Cache 220 is coupled to processing clusters 202 on the electronic device 200, which is further coupled to memory 104 that is external to SoC 102. Each processing cluster 202 includes one or more processors 204 and a cluster cache 212. The cluster cache 212 is coupled to one or more processors 204 and maintains one or more request queues 214 for one or more processors 204. Each cluster cache 212 is also associated with one or more filters 232 that can be used to determine whether cache entries for a specific virtual machine, a specific address space, or a specific virtual address is stored in the associated cluster cache 212. In some implementations, the one or more filters 232 include a Bloom filter that is associated with (e.g., represents) a set of elements and that is a probabilistic data structure configured to provide rapid and memory efficient information regarding whether or not a queried element is present in the set. For example, a Bloom filter associated with a particular cluster cache 212 can provide an indication regarding whether or not a cache entry for a specific virtual machine, a specific address space, or a specific virtual address is present in particular cluster cache 212 associated with the Bloom filter.

Each processor 204 further includes a respective data fetcher 208 to control cache fetching (including cache prefetching) associated with the respective processor 204. In some implementations, each processor 204 further includes a core cache 218 that is optionally split into an instruction cache and a data cache, and core cache 218 stores instructions and data that can be immediately executed by the respective processor 204. Each core cache 218 is also associated with one or more filters 230 that can be used to determine whether cache entries for a specific virtual machine, a specific address space, or a specific virtual address is stored in the associated core cache 218. In some implementations, the one or more filters 230 include a Bloom filter that is a probabilistic data structure configured to provide rapid and memory efficient information regarding whether or not a queried element is present in the set. For example, a Bloom filter associated with a particular core cache 218 can provide an indication whether or not a cache entry for a specific virtual machine, a specific address space, or a specific virtual address is present in the particular core cache 218 associated with the Bloom filter.

In an example, the first processing cluster 202-1 includes first processor 204-1, ...., N-th processor 204-N, first cluster cache 212-1, where N is an integer greater than 1. The first cluster cache 212-1 has one or more first request queues, and each first request queue includes a queue of demand requests and prefetch requests received from a subset of processors 204 of first processing cluster 202-1. Additionally, as new cache entries are stored at the first cluster cache 212-1, the one or more filter(s) 232-1 associated with the first cluster cache 212 are updated to store information regarding the newly added cache entries. For instance, if a new cache entry that includes a first virtual machine identifier (VMID) is stored at first cluster cache 212-1, the one or more filters 232-1 associated with the first cluster cache 212-1 is updated to store information indicating that the first cluster cache 212-1 stores at least one cache entry with the first VMID. However, as the first cluster cache 212-1 is updated with new cache entries, some cache entries may be evicted from the first cluster cache 212-1 such that the evicted cache entries are no longer stored at the first cluster cache 212-1. The one or more filters 232-1 associated with the first cluster cache 212-1 may continue to store information indicating that the first cluster cache 212-1 stores at least one cache entry with the first VMID even if cache entries that include the first VMID are no longer stored in the first cluster cache 212-1. The one or more filters 232-1 associated with the first cluster cache 212-1 must be regenerated to accurately reflect cache entries that are currently stored in the first cluster cache 212-1. For example, the one or more filters 232-1 associated with the first cluster cache 212-1 are updated in order to remove the information indicating that the first cluster cache 212-1 stores at least one cache entry with the first VMID.

In some implementations, the SoC 102 only includes a single processing cluster 202-1. Alternatively, in some implementations, the SoC 102 includes at least an additional processing cluster 202, e.g., M-th processing cluster 202-M. M-th processing cluster 202-M includes first processor 206-1, ...., N'-th processor 206-N', and M-th cluster cache 212-M, where N' is an integer greater than 1 and M-th cluster cache 212-M has one or more M-th request queues.

In some implementations, the one or more processing clusters 202 are configured to provide a central processing unit for an electronic device and are associated with a hierarchy of caches. For example, the hierarchy of caches includes three levels that are distinguished based on their distinct operational speeds and sizes. For the purposes of this application, a reference to "the speed" of a memory (including a cache memory) relates to the time required to write data to or read data from the memory (e.g., a faster memory has shorter write and/or read times than a slower memory), and a reference to "the size" of a memory relates to the storage capacity of the memory (e.g., a smaller memory provides less storage space than a larger memory). The core cache 218, cluster cache 212, and cache 220 correspond to a first level (L1) cache, a second level (L2) cache, and a third level (L3) cache, respectively. Each core cache 218 holds instructions and data to be executed directly by a respective processor 204, and has the fastest operational speed and smallest size among the three levels of memory. For each processing cluster 202, the cluster cache 212 is slower operationally than the core cache 218 and bigger in size, and holds data that is more likely to be accessed by the processors 204 of respective processing cluster 202. The cache 220 is shared by the plurality of processing clusters 202, and bigger in size and slower in speed than each of the core cache 218 and the cluster cache 212. Each processing cluster 202 controls prefetches of instructions and data to the core caches 218 and/or the cluster cache 212. Each individual processor 204 further controls prefetches of instructions and data from a respective cluster cache 212 into a respective individual core cache 218.

In some implementations, a first cluster cache 212-1 of the first processing cluster 202-1 is coupled to a single processor 204-1 in the same processing cluster, and not to any other processors (e.g., 204-N). In some implementations, the first cluster cache 212-1 of the first processing cluster 202-1 is coupled to multiple processors 204-1 and 204-N in the same processing cluster. In some implementations, the first cluster cache 212-1 of the first processing cluster 202-1 is coupled to the one or more processors 204 in the same processing cluster 202-1, and not to processors in any cluster other than the first processing cluster 202-1 (e.g., processors 206 in cluster 202-M). The first cluster cache 212-1 of first processing cluster 202-1 is sometimes referred to as a second-level cache or an L2 cache.

In each processing cluster 202, each request queue optionally includes a queue of demand requests and prefetch requests received from a subset of processors 204 of a respective processing cluster 202. Each data retrieval request received from a respective processor 204 is distributed to one of the request queues associated with the respective processing cluster. In some implementations, a request queue receives only requests received from a specific processor 204. In some implementations, a request queue receives requests from more than one processor 204 in the processing cluster 202, allowing a request load to be balanced among the plurality of request queues. Specifically, in some situations, a request queue receives only one type of data retrieval requests (such as prefetch requests) from different processors 204 in the same processing cluster 202.

Each processing cluster 202 includes or is coupled to one or more data fetchers 208 in the processors 204, and the data fetch are generated and processed by one or more data fetchers 208. The data fetch may be generated in response to receiving a demand request or a prefetch request. In some implementations, each processor 204 in the processing cluster 202 includes or is coupled to a respective data fetcher 208. In some implementations, two or more of the processors 204 in the processing cluster 202 share the same data fetcher 208. A respective data fetcher 208 may include any of a demand fetcher for fetching data for demand requests and a prefetcher for fetching data for prefetch requests.

A data fetch request (including demand requests and prefetch requests) is received at a processor (e.g., processor 204-1) of a processing cluster 202. The data fetch request is an address translation request to retrieve data from the memory 104 that includes information for translating a virtual address into a physical address. For example, a data fetch request retrieves data that includes a virtual address to physical address translation or a virtual address to physical address mapping, which may be, for example, a page entry in a page table.

A table lookaside buffer invalidation (TLBI) instruction (also referred to herein as an invalidation instruction) is received at a processor (e.g., processor 204-1) of a processing cluster 202. A TLBI instruction identifies one or more entries of an associated table lookaside buffer (TLB) to be invalidated (e.g., cleared). Optionally, a TLBI instruction includes a set of one or more instructions. The TLBI instruction includes one or more identifiers that includes any of a virtual machine identifier (VMID), an address space identifier (ASID), and a virtual address identifier (VAID), and is an instruction to invalidate cache entries for the VMID, ASID (if specified), and VAID (if specified) included in the TLBI instruction. Execution of a TLBI instruction at a cache removes all cache entries in the cache in accordance with the one or more identifiers included in the TLBI instruction. For example, a TLBI instruction that is intended for invalidating all cache entries associated with a specific virtual machine includes a VMID (e.g., optionally without including an ASID, and optionally without including a VAID). In another example, a TLBI instruction that is intended for invalidating all cache entries associated with a specific guest application includes a VMID and an ASID (e.g., optionally without including a VAID). In yet another example, a TLBI instruction that is intended for invalidating all cache entries associated with a specific component of a guest application includes a VMID, a VAID, and optionally an ASID. Execution of the TLBI instruction includes, for each respective cache in the electronic device 200, querying the one or more filters associated with a respective cache in the electronic device 200 to determine whether or not the respective cache stores cache entries associated with an identifier (e.g., a VMID, ASID, and/or VAID) specified in the TLBI instructions, and optionally whether or not the respective cache stores any global entries (e.g., entries that are identified by at least a VMID and a VAID and that may be associated with or belong to any application or guest application of the virtual machine identified by the VMID, and thus are not limited to and in some implementations not identifiable by a specific ASID). For example, each of the filters 232 associated with a respective cluster cache 212 and each of the filters 230 associated with a respective core cache 218 are queried to determine whether the respective cache stores cache entries associated the identifier specified in the TLBI instructions.

In accordance with a determination that the respective cache does not store any cache entries associated with an identifier specified in the TLBI instruction, the TLBI instruction is not executed at the respective cache. In accordance with a determination that the respective cache stores one or more cache entries associated with the one or more identifiers specified in the TLBI instruction, the TLBI instruction is executed at the respective cache and one or more filters associated with the respective cache are regenerated to accurately reflect cache entries that are currently stored in the respective cache. For example, the one or more filters associated with the respective cache are updated based on entries presently stored in the cache so as to remove any reference to the one or more identifiers specified in the executed TLBI instruction and/or one or more previously executed TLBI instructions.

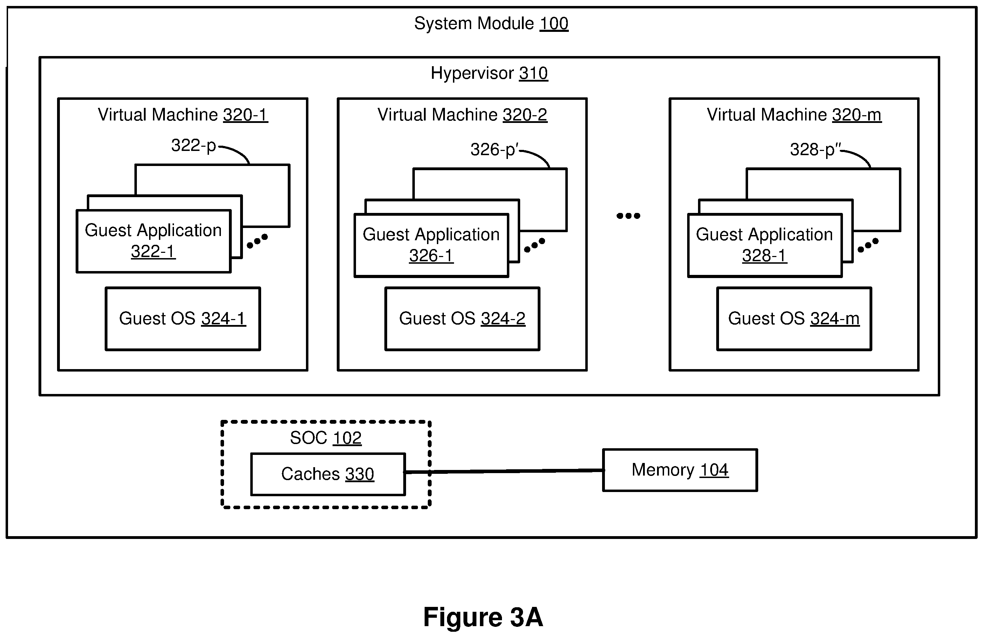

Figure 3A illustrates a block diagram of a hypervisor 310 for hosting virtual machines 320 in accordance with some implementations. The system module 100 includes hardware supporting the hypervisor 310, such as the electronic device 200 and the memory 104. The electronic device 200 includes the caches 330 (which include caches 218, 212, and 220, shown in Figure 2). The hypervisor 310 hosts one or more virtual machines 320 (e.g., virtual machines 320-1 through 320-m) and each of the virtual machines 320 runs a respective guest operating system (OS) 324 and one or more respective guest applications 322. For example, as shown in Figure 3A, the hypervisor 310 hosts m number of virtual machines 320. A first virtual machine 320-1 runs a guest OS 324-1 as well as guest applications 322-1 through 322-p, and a second virtual machine 320-2 runs a guest OS 324-2 as well as guest applications 326-1 through 326-p'. Each of the virtual machines 320 operates independently from other virtual machines even though they are hosted by the same hypervisor 310. For example, the first virtual machine 320-1 and the second virtual machine 320-2 may be initiated or created at different times. In another example, the first virtual machine 320-1 may be shut down while the second virtual machine 320-2 remains operational. For instance, the first virtual machine 320-1 may be shut down without tearing down the second virtual machine 320-2. In yet another example, the first virtual machine 320-1 may open, run, or close any of applications 322-1 through 322-p independently of the second virtual machine 320-2 opening, running, or closing any of applications 326-1 through 326-p'.

Although each of the virtual machines 320 operate independently of one another, information required to run each of the virtual machines 320, the respective guest OS 324, and the respective guest applications is stored in memory 104. The virtual address to physical address translations that are used in running the virtual machines, the guest OS 324, and any guest applications may be stored in the caches 330 of the system module 100. Thus, when a new virtual machine 320 is set up, or when a new application is opened on a virtual machine, new address translations are stored as cache entries in the caches 330. Additionally, when a virtual machine 320 is shut down or an application on a virtual machine is closed, TLBI instructions are sent to the caches 330 to invalidate cache entries associated with the shutdown virtual machine 320 or to invalidate cache entries associated with the guest application that has been closed on the virtual machine, respectively.

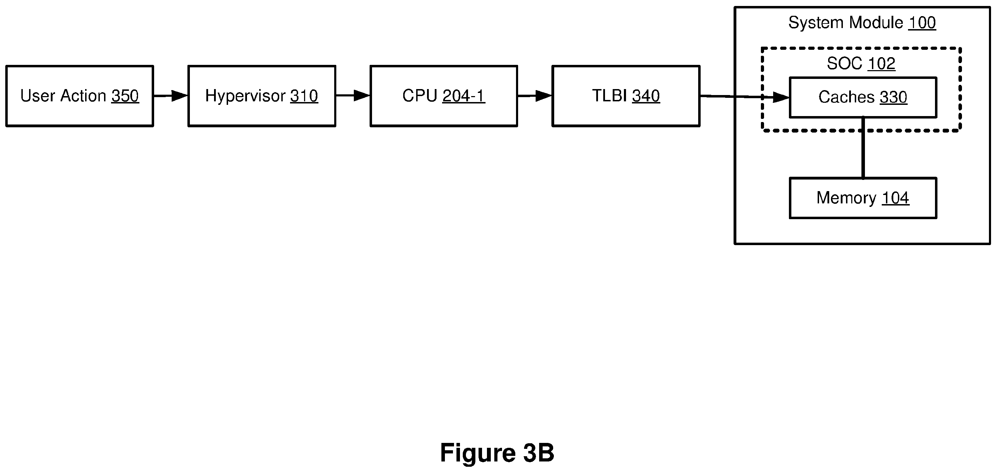

Figure 3B illustrates a method of executing TLBI instructions, in accordance with some implementations. Since the caches 330 include a plurality of caches distributed across multiple processing clusters 202 (shown in Figure 2) in the electronic device 200, the process of propagating the TLBI instructions to each cache in the electronic device 200 and executing the TLBI instructions at each cache in the electronic device 200 can take a long time. Further, a cache cannot be accessed while the TLBI instructions are being executed at the cache, resulting in even higher latency. Thus, it is desirable to have a method of executing the TLBI instructions quickly and efficiently.

Instead of executing the TLBI instructions at each of the caches 330 in the electronic device 200, the TLBI instructions can be used to query one or more filters that are associated with a respective cache in the electronic device 200 to determine whether or not the respective cache may possibly store cache entries associated with a virtual machine, an address space, and/or a virtual address identified in the TLBI instructions.

In some implementations, the one or more filters associated with a cache include one or more Bloom filters. A Bloom filter is a data structure (e.g., look-up table) that includes information regarding (e.g., information representing, indicating, or identifying) which cache entries may be stored in the cache associated with the Bloom filter. In general, the Bloom filter is updated as new cache entries are stored in the cache associated with the Bloom filter. However, the Bloom filter is not always updated once a cache entry is no longer stored in the associated cache, such as when a cache entry is evicted from the cache. Thus, a Bloom filter may provide a false indication that a cache entry associated with a particular virtual machine, an address space, or a virtual address is stored in the associated cache even if the cache entry is no longer stored at the cache. However, if a Bloom filter indicates that a cache entry associated with a particular virtual machine, an address space, or a virtual address is not stored in the associated cache, one can be certain that cache entries associated with the particular virtual machine, an address space, or a virtual address is definitely not stored in the associated cache. Thus, while a Bloom filer may provide a false positive, a Bloom filter does not provide false negatives.

In some implementations, the one or more filters associated with a cache include a splinter filter. A splinter filter is a data structure (e.g., look-up table) that includes information regarding the size of a page that is to be invalidated, whether or not the page is splintered across multiple sectors in the cache, and which sector(s), if any, the page is stored in. For example, a cache includes 4,000 (e.g., or more specifically, 4096) sets and each set covers 4 kilobytes (KB) of memory. The cache is also divided into 8 sectors, each sector including 512 sets (e.g., each sector includes a plurality of sets). In some implementations, each sector is associated with a respective splinter filter. In some implementations, a single splinter filter represents multiple (e.g., as many as all) sectors. One of ordinary skill will recognize that a cache may include any respective number of sets; a set may include any respective amount of memory (e.g., each set may include the same amount of memory as every other set, or different sets may include different amounts of memory); a cache may be divided into any number of sectors; and/or a sector may include any respective number of sets (e.g., each sector may include the same number of sets as every other sector, or different sectors may include different numbers of sets), as is appropriate. Thus, a splinter filter, or a set of one or more splinter filters, can be used to determine which sector(s) in a cache the page may be stored in. For pages that are large and splintered (e.g., when a page size of guest OS 324 is larger than a page size of hypervisor 310), the page can be stored across multiple sets and may possibly be splintered across multiple sectors in the cache. For pages that are not large and splintered (e.g., when the page size of guest OS 324 is equal or smaller than the page size of hypervisor 310), the page is stored within a single set and thus, is only stored within one sector of the cache. Use of the splinter filter allows a processor executing the TLBI instructions to identify which sectors of the cache the page is stored in and forgo executing the TLBI instructions across the entire cache (e.g., across all sectors of the cache). Use of the splinter filter also allows a processor executing the TLBI instructions to determine whether the TLBI instructions can be executed at one set within an identified sector (thereby forgoing executing the TLBI instructions at other sets within the identified sector), or if the TLBI instructions must be executed at all sets within the identified sectors of the cache.

In some implementations, the one or more filters associated with a cache include a VMID filter (e.g., a Bloom filter) that includes information regarding whether or not the cache entries stored in the cache include cache entries for specific virtual machines (e.g., cache entries that include specific VMIDs). In some implementations, the one or more filters associated with a cache include an ASID filter (e.g., a Bloom filter) that includes information regarding whether or not the cache entries stored in the cache include cache entries with specific address spaces (e.g., cache entries that include specific ASIDs). In some implementations, the one or more filters associated with a cache includes a splinter filter that includes information regarding whether or not the pages stored in the cache include cache entries with specific virtual addresses (e.g., cache entries that include specific VAIDs), the size of a page storing cache entries with the specific virtual addresses, whether the page is splintered across multiple sectors in the cache, and in which sector(s) of the cache the page is stored.

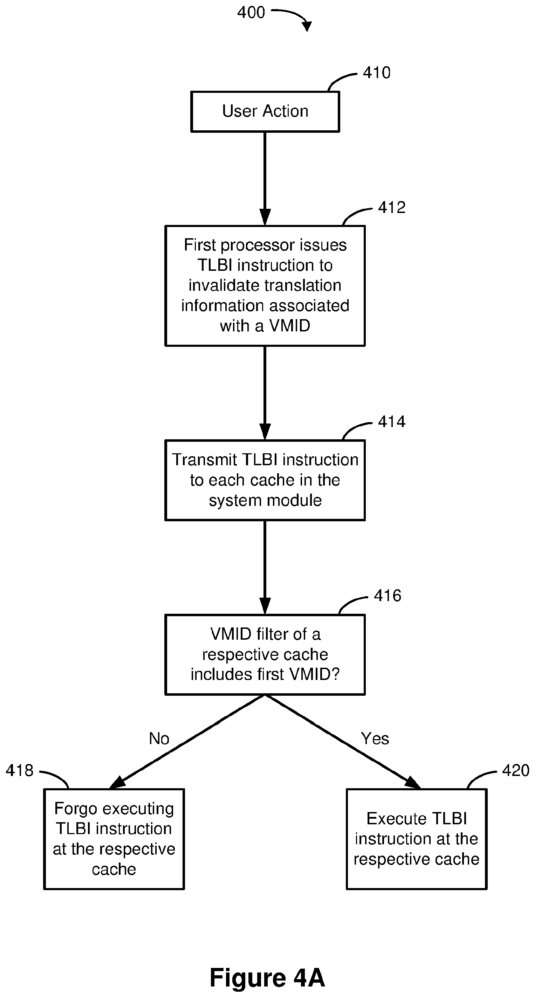

When executing TLBI instructions across all caches 330 in the electronic device 200, for each respective cache of the caches 330, the one or more filters associated with the respective cache is queried to determine whether the respective cache stores a cache entry that includes an identifier that is included in the TLBI instruction. Figures 4A - 4C are flow charts that illustrate selectively executing the TLBI instructions at selected caches based on a determination regarding whether a respective cache of the caches 330 in the electronic device 200 store one or more cache entries associated with an identifier that is identified by the TLBI instructions.

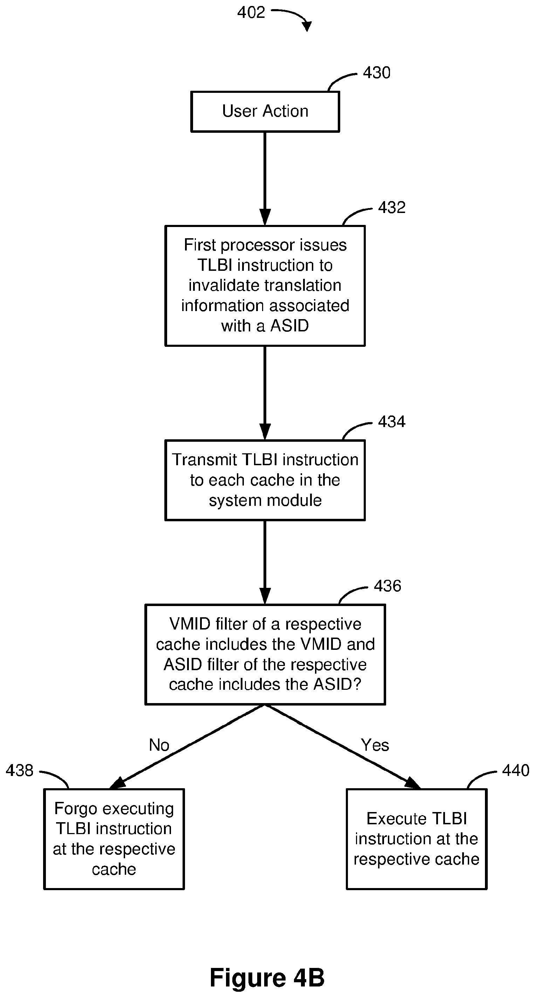

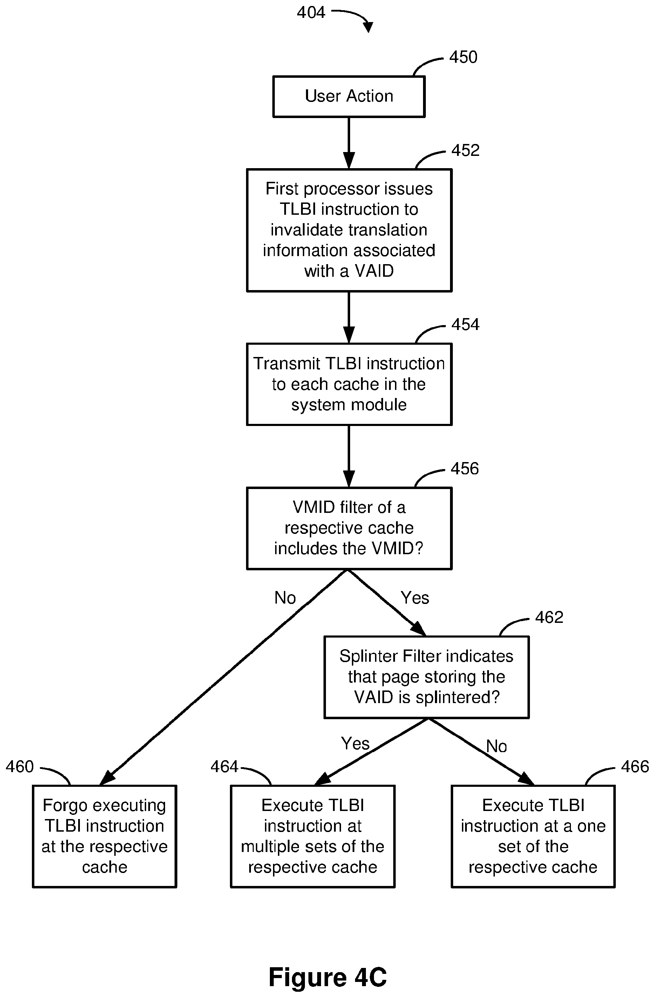

Figure 4A illustrates a flowchart 400 for executing TLBI instructions that include a virtual machine identifier (VMID), in accordance with some implementations. In some implementations, a TLBI instruction that includes a VMID (e.g., and optionally does not include an ASID and optionally does not include a VAID) is an instruction to invalidate a TLB entry by virtual machine identifier (sometimes called a "TLBI-by-VMID instruction"). In some implementations, a first processor (such as processor 204-1, shown in Figure 2) issues (step 412) a TLBI instruction in response to a user action (step 410), such as a user action to shut down a virtual machine. The TLBI instruction includes instructions to invalidate translation information associated with a first VMID such that when the TLBI instruction is executed at a cache, cache entries in the cache that are associated with the first VMID are invalidated or removed from the cache. In this example, the TLBI instruction does not identify a particular ASID nor a particular VAID by which to invalidate TLB entries (e.g., the TLBI instruction corresponding to Figure 4A is not a "TLBI-by-ASID instruction" nor a "TLBI-by-VAID instruction"; TLBI-by-ASID instructions are described in more detail herein with reference to Figure 4B, and TLBI-by-VAID instructions are described in more detail herein with reference to Figures 4C-4D). The first processor transmits (step 414) the TLBI instruction to each cache in the system module 100 (e.g., including core caches 218-1, ..., 218-N, ... 218-N', cluster caches 212-1, ..., 212-M, and cache 220). For each respective cache of the caches 330, the first processor queries (step 416) a VMID filter associated with a respective cache to determine if there is a possibility that the respective cache stores a cache entry that includes the first VMID. In accordance with a determination that the respective cache does not store a cache entry that includes the first VMID (e.g., the first VMID included in the TLBI instructions does not match (e.g., any) VMID(s) stored in the VMID filter associated with the respective cache), the first processor forgoes (step 418) or skips execution of the TLBI instruction at the respective cache. In accordance with a determination that the respective cache may store a cache entry that includes the first VMID (e.g., the first VMID included in the TLBI instructions matches a VMID stored in the VMID filter associated with the respective cache), the first processor executes (step 420) the TLBI instruction at the respective cache and regenerates the VMID filter to remove information indicating that the respective cache stores a cache entry that includes the first VMID (e.g., concurrently or in conjunction with executing the TLBI-by-VMID instruction).

Figure 4B illustrates a flowchart 402 for executing TLBI instructions that include an address space identifier (ASID), in accordance with some implementations. In some implementations, a TLBI instruction that includes an ASID (e.g., and optionally includes a VMID, and optionally does not include a VAID) is an instruction to invalidate a TLB entry by address space identifier (sometimes called a "TLBI-by-ASID instruction"). In some implementations, a first processor (such as processor 204-1, shown in Figure 2) issues (step 432) a TLBI instruction in response to a user action (step 430), such as a user action to close a process running on a virtual machine. The TLBI instruction includes instructions to invalidate translation information associated with a first ASID. In this example, the TLBI instruction does not identify a particular VAID by which to invalidate TLB entries (e.g., the TLBI instruction corresponding to Figure 4B is not a "TLBI-by-VAID instruction"; TLBI-by-VAID instructions are described in more detail herein with reference to Figures 4C-4D). When the TLBI instruction includes instructions to invalidate translation information associated with a first ASID, the TLBI instruction typically also includes a first VMID that is associated with the first ASID. Thus, when the TLBI instruction is executed at a cache, cache entries in the cache that are associated with both the first ASID and the first VMID are invalidated or removed from the cache. The first processor transmits (step 434) the TLBI instruction to each cache in the system module 100 (e.g., including core caches 218-1, ..., 218-N, ... 218-N', cluster caches 212-1, ..., 212-M, and cache 220). For each respective cache of the caches 330, the first processor queries (step 436): i) an ASID filter associated with the respective cache to determine if there is a possibility that the respective cache stores a cache entry that includes the first ASID, and ii) a VMID filter associated with the respective cache is queried to determine if there is a possibility that the respective cache stores a cache entry that includes the first VMID. In accordance with a determination that: (i) the respective cache does not store a cache entry that includes the first ASID (e.g., the first ASID included in the TLBI instructions does not match (e.g., any) ASID(s) stored in the ASID filter associated with the respective cache), and/or (ii) the cache does not store a cache entry that includes the first VMID (e.g., the first VMID included in the TLBI instructions does not match (e.g., any) VMID(s) stored in the VMID filter associated with the respective cache), the first processor forgoes (step 438) or skips execution of the TLBI instruction at the respective cache. In accordance with a determination that the respective cache may: (i) store a cache entry that includes the first ASID (e.g., the first ASID included in the TLBI instructions matches an ASID stored in the ASID filter associated with the respective cache), and (ii) store a cache entry that includes the first VMID (e.g., the first VMID included in the TLBI instructions matches a VMID stored in the VMID filter), the first processor executes (440) the TLBI instruction at the respective cache and the first processor regenerates the ASID filter to remove information indicating that the respective cache stores a cache entry that includes the first ASID (e.g., concurrently or in conjunction with executing the TLBI-by-ASID instruction).

Figure 4C illustrates a flowchart 404 for executing TLBI instructions that include a virtual address identifier (VAID) (e.g., a virtual address (VA)), in accordance with some implementations. In some implementations, a TLBI instruction that includes a VAID (e.g., and optionally includes a VMID, and optionally includes an ASID) is an instruction to invalidate a TLB entry by virtual address identifier (sometimes called a "TLBI-by-VAID instruction"). In some implementations, a first processor (such as processor 204-1, shown in Figure 2) issues (step 452) a TLBI instruction in response to a user action (step 450), such as a user action that causes a page to be closed or invalidated. The TLBI instruction includes one or more instructions to invalidate translation information associated with a first VAID. When the TLBI instruction includes instructions to invalidate translation information associated with a first VAID, the TLBI instruction typically also includes a first ASID and a first VMID that are associated with the first VAID. Thus, the TLBI instruction includes instructions to invalidate translation information associated with a first VAID and a first VMID such that execution of the TLBI instructions at a cache invalidates cache entries that are associated with the first VAID and the first VMID. The first processor transmits (step 454) the TLBI instruction to each cache in the system module 100 (e.g., including core caches 218-1, ..., 218-N, ... 218-N', cluster caches 212-1, ..., 212-M, and cache 220). For each respective cache of the caches 330, the first processor queries (step 456) a VMID filter associated with the respective cache to determine if there is a possibility that the respective cache stores a cache entry that includes the first VMID. In accordance with a determination that: the respective cache does not store a cache entry that includes the first VMID (e.g., the first VMID included in the TLBI instructions does not match VMID(s) stored in the VMID filter (e.g., does not match a VMID stored in the VMID filter, because the first VMID does not match any of one or more VMIDs indicated or represented in the VMID filter, or because the VMID filter does not indicate any VMIDs), sometimes referred to as a "miss" in the VMID filter), the first processor forgoes (step 460) or skips execution of the TLBI instruction at the cache. In accordance with a determination that the respective cache may store a cache entry that includes the first VMID (e.g., the first VMID included in the TLBI instructions matches a VMID stored in the VMID filter, sometimes referred to as a "hit" in the VMID filter), the first processor queries (step 462) a splinter filter to determine whether or not the page storing the VAID is splintered (e.g., stored across multiple sectors in the cache) and/or to identify which sector(s) include the splintered page. In accordance with a determination, based on results output from the splinter filter, that the page storing the VAID is splintered across multiple sets of a respective sector and/or multiple sectors in the cache (step 462-Yes), the first processor executes the TLBI instructions at sector(s) that are identified by the splinter filter, including executing the TLBI instructions at multiple sets within the cache that are part of the identified sectors (step 464). For example, if the splinter filter indicates that the page storing the VAID is splintered across multiple sets within a respective sector, the first processor executes the TLBI-by-VAID instruction at the respective sector. In another example, if the splinter filter indicates that the page storing the VAID is splintered across multiple sectors, the first processor executes the TLBI-by-VAID instruction at the multiple sectors. In some implementations, concurrently or in conjunction with executing the TLBI-by-VAID instruction at a respective sector, the first processor regenerates the splinter filter corresponding to the respective sector to remove information indicating that the respective sector of the cache stores a cache entry that includes the first VAID. In accordance with a determination, based on results output from the splinter filter, that the page storing the VAID is not splintered across multiple sets in the cache (step 462-No) (e.g., by determining that the page storing the VAID is not a splintered page), the first processor executes the TLBI instructions at one set within the cache (step 466). The set at which the TLBI instructions are executed is identified by the VAID.

In some implementations, the page storing the VAID may be any one of a plurality of predefined page sizes. In some implementations, the size of the page storing the VAID is not known or provided to the first processor. In some implementations, determining the cache sector(s) in which the page storing the first VAID is stored includes querying the splinter filter using the VAID and a respective page size of the plurality of predefined page sizes to determine whether a page of the respective size and storing the VAID would be splintered across multiple sets and/or multiple sectors in the cache. In some implementations, the query is performed or repeated for each page size of the plurality of predefined page sizes. In some implementations, the first processor executes the TLBI instruction at the sector(s), if any, that are identified by the repeated querying of the splinter filter using each of the plurality of predefined page sizes (e.g., the TLBI instruction is executed after each iteration of querying the splinter filter using a respective page size on any sector(s) returned by that iteration of the query, or the TLBI instruction is executed after multiple iterations of the query having been performed for multiple of the plurality of predefined page sizes, on any sector(s) identified by the multiple iterations of the query).

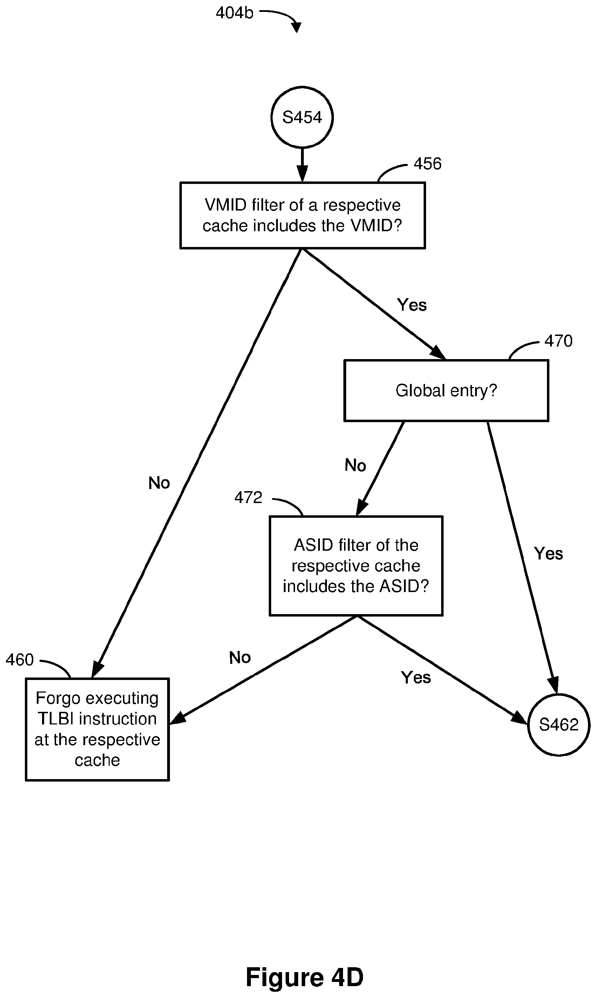

Figure 4D illustrates a flowchart 404b for executing TLBI instructions that include a virtual address identifier (VAID), in accordance with some implementations. In some implementations, invalidation of a TLB entry based on VAID (e.g., executing a TLBI_by_VAID instruction) includes one or more additional determinations concerning an ASID specified as being associated with the VAID and/or whether there is a possibility that the respective cache stores a cache entry that is a global entry. Step 454 shown in Figure 4D corresponds to (e.g., is the same as) the like-numbered step 454 shown in and described with reference to Figure 4C. Step 456 shown in Figure 4D corresponds to the like-numbered step 456 shown in and described with reference to Figure 4C in that, in accordance with a determination that the first VMID included in the TLBI instruction does not match a VMID in the VMID filter (e.g., the first VMID misses in the VMID filter) (step 454-No), the TLBI instruction is not executed at the respective cache, as indicated by Figure 4D step 460, corresponding to like-numbered step 460 in Figure 4D. In contrast to Figure 4C, however, in accordance with a determination that the first VMID matches a VMID in the VMID filter (e.g., the first VMID hits in the VMID filter, indicating that there is a possibility that the respective cache stores one or more cache entries associated with or including the first VMID, though the indication may be a false positive) (step 454-Yes), additional processing of the TLBI instruction is performed instead of proceeding directly to step 462.

In particular, the first processor queries (step 470) a global filter to determine whether any global entries associated with the first VAID might be stored in the respective cache. In some implementations, the global filter includes a global indicator bit that is set in response to a global entry being stored in the respective cache, and cleared (or not set) if a global entry has not been stored in the respective cache. In some implementations, the global filter includes a Bloom filter as described herein. As explained herein, a global entry is a cache entry or set of cache entries that is or are associated with a respective VMID (e.g., a respective guest OS) and that may be associated with any process (e.g., application) executing on the guest OS. Thus, although a TLBI-by-VAID instruction for a global entry may specify a respective ASID (which in some implementations is optionally a null ASID), the result of a query to determine whether the specified ASID fails to match (e.g., misses) in the ASID filter for the respective cache alone is not conclusive of whether the first processor may forgo executing the TLBI instruction at the respective cache. Even if the specified ASID for a TLBI-by-VAID instruction for a global entry misses in the ASID filter (or alternatively if no ASID is specified for the TLBI-by-VAID instruction, resulting in a miss in the ASID filter), the VAID may still be stored in the respective cache (e.g., associated with a different ASID, or not associated with any ASID).

Accordingly, in scenarios where the first processor determines that the respective cache does not store (step 470-No) any global entries associated with the first VAID (e.g., in that querying the global filter based on the first VAID results in a "miss" in the global filter and/or in that a global indicator bit is not set), the ASID filter associated with the respective cache may then be used. In some implementations, the global indicator bit is used to indicate whether any global entries are stored in a portion of the respective cache that is associated with user and/or application memory space. In some implementations, the global filter is used to indicate whether any global entries are stored in a portion of the respective cache that is associated with kernel and/or operating system memory space. In some implementations, determining that the respective cache does not store any global entries associated with the first VAID corresponds to determining that the respective cache does not store any global entries (e.g., by determining that the global filter does not store any global entry identifiers and/or that a global indicator bit is not set). Accordingly, the first processor may then query (step 472) the ASID filter to determine whether there is a possibility that the respective cache stores a cache entry that includes the first ASID. If the result of the query is that the respective cache does not store (step 472-No) any cache entry that includes the first ASID (e.g., the first ASID misses in the ASID filter), the first processor may forgo (step 460) executing the TLBI instruction at the respective cache.

Alternatively, if the first processor determines that there is a possibility that the respective cache stores (step 470-Yes) a global entry associated with the first VAID (e.g., in that querying the global filter based on the VAID results in a "hit" in the global filter and/or that a global indicator bit is set), the first processor processes the TLBI-by-VAID instruction as described herein with reference to steps 462, 464, and 466 of Figure 4C. Similarly, if the first processor determines using the ASID filter that there is a possibility that the respective cache stores (step 472-Yes) a cache entry that includes the first ASID (e.g., the first ASID hits in the ASID filter), the first processor proceeds to step 462 to process the TLBI-by-VAID instruction as described herein with reference to steps 462, 464, and 466 of Figure 4C.

With respect to step 462, in some implementations, querying the splinter filter using the VAID (e.g., optionally for a respective instance of the query using a respective page size of the plurality of predefined page sizes) is skipped in accordance with a determination that the page storing the VAID is stored in kernel and/or operating system memory space, that the global filter indicates that no global entry associated with the first VAID is stored in the respective cache (e.g., in kernel and/or operating system memory space), and the ASID filter indicates that the respective cache does not store any entry associated with the first ASID. In the absence of any of these conditions (e.g., the page storing the VAID is not stored in kernel and/or operating system memory space (for example by being stored in user and/or application memory space), the global filter indicates that the respective cache stores one or more global entries (optionally including a global entry associated with the VAID), and/or the ASID filter indicates that the respective caches stores one or more entries associated with the first ASID), the first processor proceeds to query the splinter filter using the VAID as described herein with reference to step 462 (e.g., optionally for a respective instance of the query using a respective page size of the plurality of predefined page sizes). In some implementations, where a global filter is queried as part of step 462, the determination in step 470 is a determination whether a global indicator bit, that indicates whether any global entries are stored in a portion of the respective cache that is associated with user and/or application memory space, is set (step 470-Yes) or not set (step 470-No), In some implementations, in combination with executing the TLBI instruction at the respective cache (e.g., in accordance with step 464 or 466 of Figure 4C), the first processor regenerates the global filter to remove information indicating that the respective cache stores a global entry that includes the first VAID (e.g., optionally in accordance with the determination that the VAID "hit" in the global filter). In some implementations, in combination with executing the TLBI instruction at the respective cache (e.g., in accordance with step 464 or 466 of Figure 4C), the first processor regenerates the ASID filter to remove information indicating that the respective cache stores a cache entry that includes the first ASID (e.g., optionally in accordance with the determination that the ASID "hit" in the ASID filter).

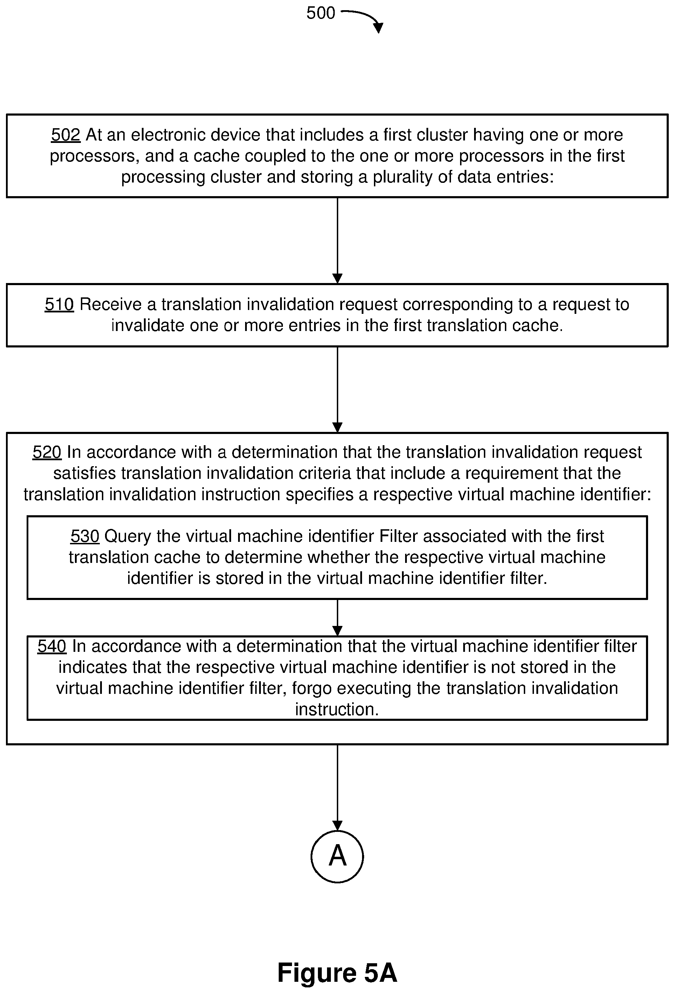

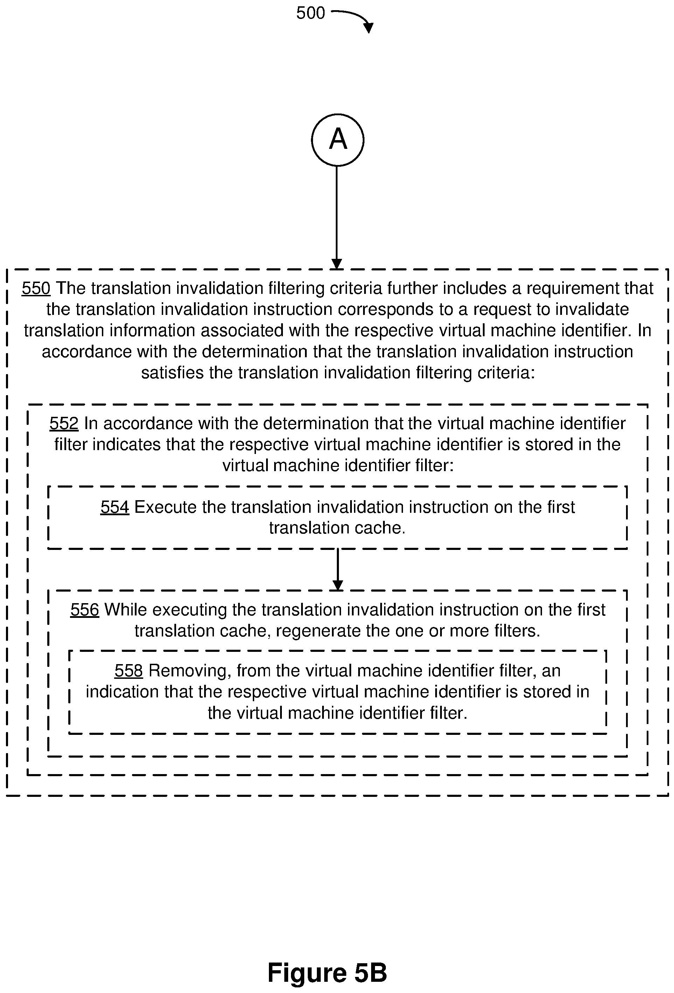

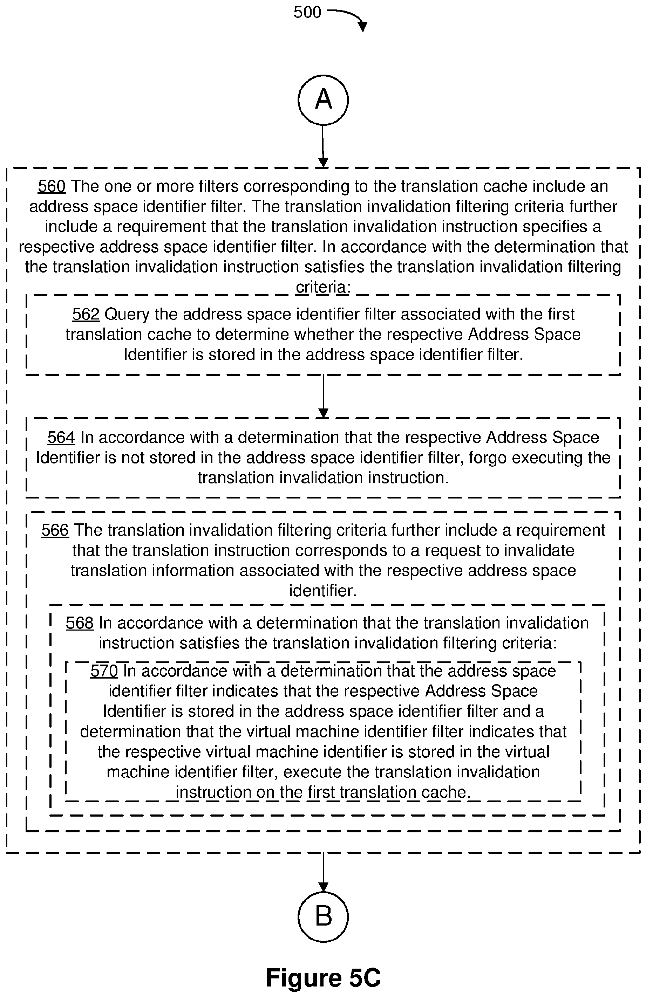

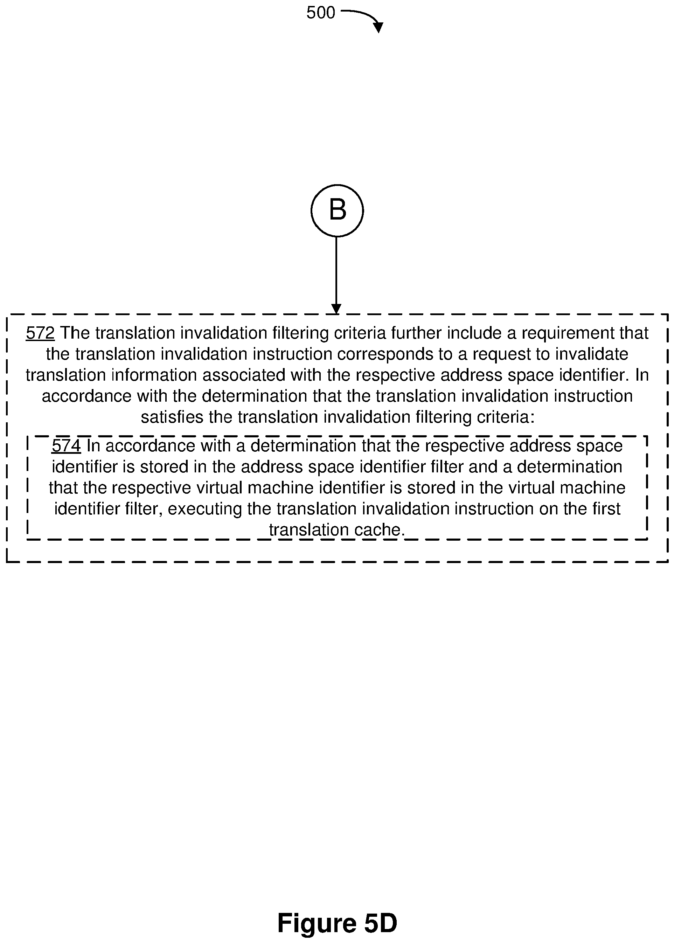

Figures 5A - 5D illustrate a flow chart of an example method 500 for executing TLBI instructions, in accordance with some implementations. Method 500 is implemented (step 502) at an electronic device 200 that includes a plurality of processors (e.g., that are arranged into one or more processing clusters, such as first processing cluster 202-1 having one or more processors 204) configured to execute one or more virtual machines 320 (e.g., virtual machines 310-1 through 310-m). A respective processor (e.g., any of processors 204-1 through 204-N and 206-1 through 206-N') of the plurality of processors is associated with a first translation cache (e.g., core cache 218, cluster cache 212-1) and one or more filters associated with the first translation cache. The one or more filters 230 are configured to track cache entries in the respective translation cache, such as one or more filters 230-1 configured to track cache entries in a translation cache 218-1 or one or more filters 232-1 configured to track cache entries in a translation cache 212-1. The one or more filters include a virtual machine identifier (VMID) filter, and the respective processor is configured to receive (510) a translation invalidation instruction (e.g., table look-aside buffer invalidation (TLB) instruction) to invalidate one or more cache entries in the first translation cache. In accordance with a determination (520) that the translation invalidation instruction satisfies translation invalidation filtering criteria that include a requirement that the translation invalidation instruction specifies a respective VMID, the respective processor is configured to query (530) the VMID filter associated with the first translation cache 218 to determine whether the respective VMID is stored in the VMID filter. In accordance with a determination that the VMID filter indicates that the respective VMID is not stored in the VMID filter, forgo (540) executing the translation invalidation instruction.

In some implementations, the translation invalidation filtering criteria further include (550) a requirement that the translation invalidation instruction corresponds to a request to invalidate translation information associated with the respective VMID. In accordance with the determination (552) that the VMID filter indicates that the respective VMID is stored in the VMID filter, the respective processor is configured to execute (554) the translation invalidation instruction on the first translation cache.

In some implementations, the processor is configured to, while executing the translation invalidation instruction on the first translation cache, regenerate (556) or cause regeneration of at least one of the one or more filters, such as the VMID filter.

In some implementations, regenerating (556) the one or more filters includes removing (558), from the VMID filter, an indication that the respective VMID is stored in the VMID filter.

In some implementations, the one or more filters associated with the first translation cache include an ASID filter and the translation invalidation filtering criteria further include a requirement that the translation invalidation instruction specifies a respective ASID. In accordance with the determination (560) that the translation invalidation instruction satisfies the translation invalidation filtering criteria, the respective processor is configured to query (562) the ASID filter associated with the first translation cache to determine whether the respective ASID is stored in the ASID filter. In accordance with a determination (564) that the respective ASID is not stored in the ASID filter, the respective processor is configured to forgo (564) executing the translation invalidation instruction. In some implementations, the respective processor is also configured to forgo executing the translation invalidation instruction in accordance with the determination that the respective VMID is not stored in the VMID filter. In some implementations, in accordance with a determination that any of: the respective ASID is not stored in the ASID filter and the respective VMID is not stored in the VMID filter, the respective processor is configured to forgo executing the translation invalidation instruction at the first translation cache.

In some implementations, the translation invalidation filtering criteria further include (566) a requirement that the translation instruction corresponds to a request to invalidate translation information associated with the respective ASID. In accordance with the determination (568) that the translation invalidation instruction satisfies the translation invalidation filtering criteria and in accordance with a determination that the ASID filter indicates that the respective ASID is stored in the ASID filter and a determination that the VMID filter indicates that the respective VMID is stored in the VMID filter, the respective processor is configured to execute (570) the translation invalidation instruction on the first translation cache.

In some implementations, the translation invalidation filtering criteria further include (572) a requirement that the translation invalidation instruction corresponds to a request to invalidate translation information associated with the respective ASID (e.g., the translation invalidation instruction specifies a VMID and an ASID). In accordance with a determination that any of: the VMID filter indicates that the respective VMID is not stored in the VMID filter, and the ASID filter indicates that the respective ASID is not stored in the ASID filter, forgo (540) executing the translation invalidation instruction. In some implementations, in accordance with the determination that the translation invalidation instruction satisfies the translation invalidation filtering criteria and in accordance with a determination that the ASID filter indicates that the respective ASID is stored in the ASID filter and a determination that the VMID filter indicates that the respective VMID is stored in the virtual machine identifier filter, the respective processor is configured to execute (574) the translation invalidation instruction on the first translation cache.

In some implementations, the one or more filters corresponding to the first translation cache include one or more splinter filters, and the translation invalidation filtering criteria further include a requirement that the translation invalidation instruction corresponds to a request to invalidate translation information associated with the respective VAID (e.g., the translation invalidation instruction specifies a VAID and a VMID). In accordance with a determination that the VMID filter indicates that the respective VMID is not stored in the VMID filter, forgo (540) executing the translation invalidation instruction.

In some implementations, in accordance with the determination that the translation invalidation instruction satisfies the translation invalidation filtering criteria, the method 500 includes querying the one or more splinter filters associated with the first translation cache to determine whether a respective page storing the respective virtual address identifier is splintered across multiple sectors of the respective translation cache. The method 500 also includes, in accordance with a determination that the respective page storing the respective virtual address identifier is splintered across multiple sectors of the respective translation cache, executing the translation invalidation instruction at multiple sets of the respective translation cache. The method also includes, in accordance with a determination that the respective page storing the respective virtual address identifier is not splintered across multiple sectors of the respective translation cache, executing the translation invalidation instruction at one set within an identified sector of the respective translation cache.

It should be understood that the particular order in which the operations in Figures 5A - 5D have been described are merely exemplary and are not intended to indicate that the described order is the only order in which the operations could be performed. One of ordinary skill in the art would recognize various ways to reorder the operations described herein. Additionally, it should be noted that details of other processes described herein with respect to method 500 (e.g., Figures 5A - 5D) are also applicable in an exchangeable manner. For brevity, these details are not repeated here.

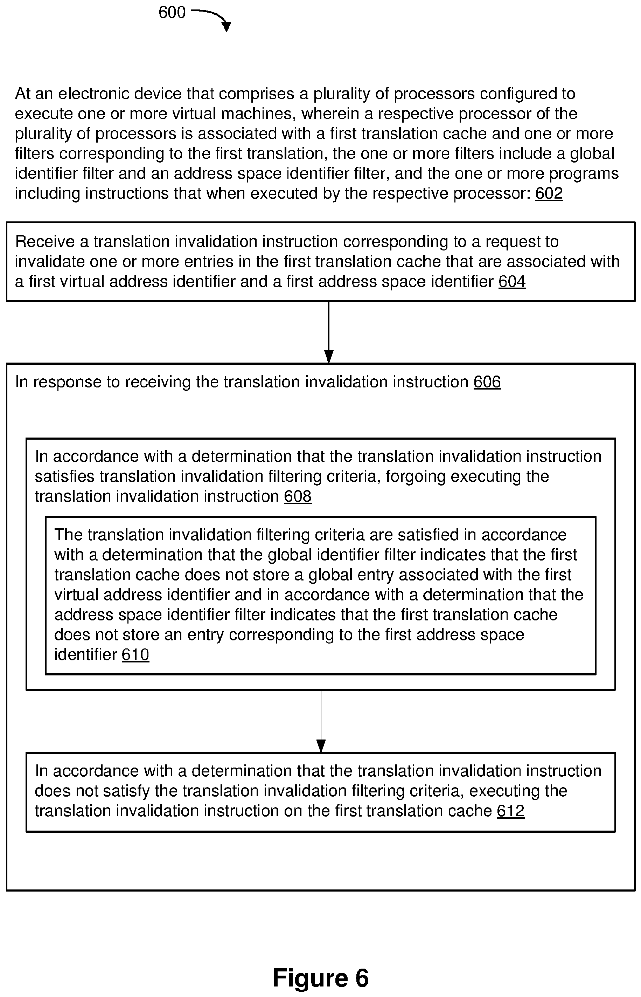

Figure 6 illustrates a flow chart of an example method 600 for executing a translation invalidation instruction, in accordance with some implementations. Method 600 is implemented (step 602) at an electronic device 200 that includes a plurality of processors (e.g., that are arranged into one or more processing clusters, such as first processing cluster 202-1 having one or more processors 204) configured to execute one or more virtual machines 320 (e.g., virtual machines 310-1 through 310-m). A respective processor (e.g., any of processors 204-1 through 204-N and 206-1 through 206-N') of the plurality of processors is associated with a first translation cache (e.g., core cache 218, cluster cache 212-1) and one or more filters associated with the first translation cache. The one or more filters 230 include a global identifier filter that is indicative of one or more global entries stored in the first translation cache, and an address space identifier filter that is indicative of one or more address spaces for which at least one entry is stored in the first translation cache. The respective processor 204 is configured to receive (604) a translation invalidation instruction corresponding to a request to invalidate one or more entries in the first translation cache that are associated with a first virtual address identifier and a first address space identifier.

In response to receiving the translation invalidation instruction (606), the respective processor 204 forgoes (608) executing the translation invalidation instruction in accordance with a determination that the translation invalidation instruction satisfies translation invalidation filtering criteria. The translation invalidation filtering criteria are satisfied (610) in accordance with a determination that the global identifier filter indicates that the first translation cache does not store a global entry associated with the first virtual address identifier and in accordance with a determination that the address space identifier filter indicates that the first translation cache does not store an entry corresponding to the first address space identifier. In response to receiving the translation invalidation instruction (606), the respective processor 204 executes (612) the translation invalidation instruction on the first translation cache in accordance with a determination that the translation invalidation instruction does not satisfy the translation invalidation filtering criteria.

In some implementations, the global identifier filter indicates that the first translation cache does not store a global entry associated with the first virtual address identifier by indicating that the first translation cache does not store any global entry.

In some implementations, determining that the translation invalidation instruction does not satisfy the translation invalidation filtering criteria includes determining that the global identifier filter indicates that the first translation cache stores a global entry associated with the first virtual address identifier.

In some implementations, executing the translation invalidation instruction on the first translation cache includes, in accordance with a determination that a respective page storing the first virtual address identifier is not a splintered page, executing the translation invalidation instruction within a respective set, identified by the translation invalidation instruction, of the respective translation cache.

In some implementations, the one or more filters corresponding to the first translation cache include one or more splinter filters corresponding to a plurality of sectors of the first translation cache. Executing the translation invalidation instruction on the first translation cache includes, in accordance with a determination that a respective page storing the first virtual address identifier is a splintered page, querying the one or more splinter filters to identify a subset of sectors, of the plurality of sectors, that store the respective page storing the first virtual address identifier, and executing the translation invalidation instruction on the identified subset of sectors. Further, in some implementations, in combination with executing the translation invalidation instruction on a respective sector of the plurality of sectors, the respective processor regenerates a respective splinter filter, of the one or more splinter filters, that corresponds to the respective sector.

In some implementations, in combination with executing the translation invalidation instruction on the first translation cache, the respective processor regenerates the global identifier filter.

In some implementations, the one or more filters include a virtual machine identifier filter corresponds to the first translation cache, and the translation invalidation filtering criteria are satisfied in accordance with a determination that the virtual machine identifier filter indicates that the first translation cache does not store an entry corresponding to the first virtual machine identifier.

In some implementations, a global entry associated with the first virtual address identifier is a cache entry that is associated with the first virtual address identifier without regard to an address space identifier.

It should be understood that the particular order in which the operations in Figure 6 have been described are merely exemplary and are not intended to indicate that the described order is the only order in which the operations could be performed. One of ordinary skill in the art would recognize various ways to reorder the operations described herein. Additionally, it should be noted that details of other processes described herein with respect to method 600 (e.g., Figure 6) are also applicable in an exchangeable manner. For brevity, these details are not repeated here.

Implementation examples are described in at least the following numbered clauses:
Clause 1. An electronic device, comprising: a plurality of processors configured to execute one or more virtual machines, wherein a respective processor of the plurality of processors is associated with a first translation cache and one or more filters corresponding to the first translation cache, the one or more filters include a virtual machine identifier filter, and the respective processor is configured to: receive a translation invalidation instruction corresponding to a request to invalidate one or more entries in the first translation cache; and in accordance with a determination that the translation invalidation instruction satisfies translation invalidation filtering criteria that include a requirement that the translation invalidation instruction specifies a respective virtual machine identifier: query the virtual machine identifier filter associated with the first translation cache to determine whether the respective virtual machine identifier is stored in the virtual machine identifier filter; and in accordance with a determination that the virtual machine identifier filter indicates that the respective virtual machine identifier is not stored in the virtual machine identifier filter, forgo executing the translation invalidation instruction.
Clause 2. The electronic device of clause 1, wherein the respective processor is configured to: in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective virtual machine identifier: in accordance with a determination that the virtual machine identifier filter indicates that the respective virtual machine identifier is stored in the virtual machine identifier filter: execute the translation invalidation instruction on the first translation cache.
Clause 3. The electronic device of clause 2, wherein the respective processor is configured to: while executing the translation invalidation instruction on the first translation cache, regenerate the one or more filters.
Clause 4. The electronic device of clause 3, wherein regenerating the one or more filters includes removing, from the virtual machine identifier filter, an indication that the respective virtual machine identifier is stored in the virtual machine identifier filter.
Clause 5. The electronic device of clause 1, wherein the one or more filters corresponding to the first translation cache include an address space identifier filter, and the respective processor is configured to: in accordance with the determination that the translation invalidation instruction satisfies the translation invalidation filtering criteria, wherein the translation invalidation filtering criteria further include a requirement that the translation invalidation instruction specifies a respective address space identifier: query the address space identifier filter associated with the first translation cache to determine whether the respective address space identifier is stored in the address space identifier filter; and in accordance with a determination that the respective address space identifier is not stored in the address space identifier filter, forgo executing the translation invalidation instruction.
Clause 6. The electronic device of clause 5, wherein the respective processor is configured to: in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective address space identifier: in accordance with a determination that the address space identifier filter indicates that the respective address space identifier is stored in the address space identifier filter and a determination that the virtual machine identifier filter indicates that the respective virtual machine identifier is stored in the virtual machine identifier filter: execute the translation invalidation instruction on the first translation cache.
Clause 7. The electronic device of clause 1, wherein the one or more filters corresponding to the first translation cache include one or more splinter filters, and the respective processor is configured to: in accordance with the determination that the translation invalidation instruction satisfies the translation invalidation filtering criteria, wherein the translation invalidation filtering criteria further include a requirement that the translation invalidation instruction specifies a respective virtual address identifier: query the one or more splinter filters associated with the first translation cache to determine whether a respective page storing the respective virtual address identifier is splintered across multiple sectors of the respective translation cache; and in accordance with a determination that the respective page storing the respective virtual address identifier is splintered across multiple sectors of the respective translation cache, execute the translation invalidation instruction at the multiple sectors of the respective translation cache.
Clause 8. The electronic device of clause 7, wherein the respective processor is configured to: in accordance with the determination that the translation invalidation instruction satisfies the translation invalidation filtering criteria: in accordance with a determination that the respective page storing the respective virtual address identifier is not splintered across multiple sectors of the respective translation cache, execute the translation invalidation instruction within an identified sector of the respective translation cache.
Clause 9. The electronic device of any of clauses 1-8, wherein the one or more filters includes a bloom filter.
Clause 10. The electronic device of any of clauses 1-8, wherein: the respective processor of the plurality of processors is associated with a second translation cache and one or more second filters corresponding to the second translation cache; the second translation cache corresponds to a cache level that is different from a cache level of the first translation cache; and the one or more second filters are distinct from the one or more filters associated with the first translation cache.
Clause 11. A non-transitory computer readable storage medium, storing one or more programs configured for execution by an electronic device that comprises a plurality of processors configured to execute one or more virtual machines, wherein a respective processor of the plurality of processors is associated with a first translation cache and one or more filters corresponding to the first translation cache, the one or more filters include a virtual machine identifier filter, and the one or more programs including instructions that when executed by the respective processor, cause the respective processor to: receive a translation invalidation instruction corresponding to a request to invalidate one or more entries in the first translation cache; and in accordance with a determination that the translation invalidation instruction satisfies translation invalidation filtering criteria that include a requirement that the translation invalidation instruction specifies a respective virtual machine identifier: query the virtual machine identifier filter associated with the first translation cache to determine whether the respective virtual machine identifier is stored in the virtual machine identifier filter, and in accordance with a determination that the virtual machine identifier filter indicates that the respective virtual machine identifier is not stored in the virtual machine identifier filter, forgo executing the translation invalidation instruction.
Clause 12. The non-transitory computer readable storage medium of clause 11, wherein the one or more programs further include instructions that cause the respective processor to: in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective virtual machine identifier: in accordance with a determination that the virtual machine identifier filter indicates that the respective virtual machine identifier is stored in the virtual machine identifier filter: execute the translation invalidation instruction on the first translation cache.
Clause 13. The non-transitory computer readable storage medium of clause 12, wherein the one or more programs further include instructions that cause the respective processor to: while executing the translation invalidation instruction on the first translation cache, regenerate the one or more filters.
Clause 14. The non-transitory computer readable storage medium of clause 11, wherein the one or more filters corresponding to the first translation cache include an address space identifier filter, and the one or more programs further include instructions that cause the respective processor to: in accordance with the determination that the translation invalidation instruction satisfies the translation invalidation filtering criteria, wherein the translation invalidation filtering criteria further include a requirement that the translation invalidation instruction specifies a respective address space identifier: query the address space identifier filter associated with the first translation cache to determine whether the respective address space identifier is stored in the address space identifier filter; and in accordance with a determination that the respective address space identifier is not stored in the address space identifier filter, forgo executing the translation invalidation instruction.
Clause 15. The non-transitory computer readable storage medium of clause 14, wherein the one or more filters corresponding to the first translation cache include an address space identifier filter, and the one or more programs further include instructions that cause the respective processor to: in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective address space identifier: in accordance with a determination that the address space identifier filter indicates that the respective address space identifier is stored in the address space identifier filter and a determination that the virtual machine identifier filter indicates that the respective virtual machine identifier is stored in the virtual machine identifier filter: execute the translation invalidation instruction on the first translation cache.
Clause 16. The non-transitory computer readable storage medium of clause 11, wherein the one or more filters corresponding to the first translation cache include one or more splinter filters, the respective processor is configured to: in accordance with the determination that the translation invalidation instruction satisfies the translation invalidation filtering criteria, wherein the translation invalidation filtering criteria further include a requirement that the translation invalidation instruction specifies a respective virtual address identifier: query the one or more splinter filters associated with the first translation cache to determine whether a respective page storing the respective virtual address identifier is splintered across multiple sectors of the respective translation cache; and in accordance with a determination that the respective page storing the respective virtual address identifier is splintered across multiple sectors of the respective translation cache, execute the translation invalidation instruction at the multiple sectors of the respective translation cache.
Clause 17. The non-transitory computer readable storage medium of clause 16, wherein the respective processor is configured to: in accordance with the determination that the translation invalidation instruction satisfies the translation invalidation filtering criteria: in accordance with a determination that the respective page storing the respective virtual address identifier is not splintered across multiple sectors of the respective translation cache, execute the translation invalidation instruction within an identified sector of the respective translation cache.
Clause 18. A method executed at an electronic device that includes a first processing cluster having a plurality of processors, and a cache coupled to the one or more processors in the first processing cluster and storing a plurality of data entries, wherein a respective processor of the plurality of processors is associated with a first translation cache and one or more filters corresponding to the first translation cache, and the one or more filters include a virtual machine identifier filter, the method comprising: receiving a translation invalidation instruction corresponding to a request to invalidate one or more entries in the first translation cache; and in accordance with a determination that the translation invalidation instruction satisfies translation invalidation filtering criteria that include a requirement that the translation invalidation instruction specifies a respective virtual machine identifier: querying the virtual machine identifier filter associated with the first translation cache to determine whether the respective virtual machine identifier is stored in the virtual machine identifier filter; and in accordance with a determination that the virtual machine identifier filter indicates that the respective virtual machine identifier is not stored in the virtual machine identifier filter, forgoing executing the translation invalidation instruction.
Clause 19. The method of clause 18, the method further comprising: in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective virtual machine identifier: in accordance with a determination that the virtual machine identifier filter indicates that the respective virtual machine identifier is stored in the virtual machine identifier filter: executing the translation invalidation instruction on the first translation cache.
Clause 20. The method of clause 19, the method further comprising: while executing the translation invalidation instruction on the first translation cache, regenerating the one or more filters.
Clause 21. The method of clause 18, wherein the one or more filters corresponding to the first translation cache include an address space identifier filter, the method further comprising: in accordance with the determination that the translation invalidation instruction satisfies the translation invalidation filtering criteria, wherein the translation invalidation filtering criteria further include a requirement that the translation invalidation instruction specifies a respective address space identifier: querying the address space identifier filter associated with the first translation cache to determine whether the respective address space identifier is stored in the address space identifier filter; and in accordance with a determination that the respective address space identifier is not stored in the address space identifier filter, forgoing executing the translation invalidation instruction.
Clause 22. The method of clause 21, the method further comprising: in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective address space identifier: in accordance with a determination that the address space identifier filter indicates that the respective address space identifier is stored in the address space identifier filter and a determination that the virtual machine identifier filter indicates that the respective virtual machine identifier is stored in the virtual machine identifier filter: executing the translation invalidation instruction on the first translation cache.
Clause 23. The method of clause 18, wherein the one or more filters corresponding to the first translation cache include one or more splinter filters, the method further comprising: in accordance with the determination that the translation invalidation instruction satisfies the translation invalidation filtering criteria, wherein the translation invalidation filtering criteria further include a requirement that the translation invalidation instruction specifies a respective virtual address identifier: querying the one or more splinter filters associated with the first translation cache to determine whether a respective page storing the respective virtual address identifier is splintered across multiple sectors of the respective translation cache; and in accordance with a determination that the respective page storing the respective virtual address identifier is splintered across multiple sectors of the respective translation cache, executing the translation invalidation instruction at the multiple sectors of the respective translation cache.
Clause 24. The method of clause 23, the method further comprising: in accordance with the determination that the translation invalidation instruction satisfies the translation invalidation filtering criteria: in accordance with a determination that the respective page storing the respective virtual address identifier is not splintered across multiple sectors of the respective translation cache, executing the translation invalidation instruction within an identified sector of the respective translation cache.
Clause 25. An electronic device, comprising: a plurality of processors configured to execute one or more virtual machines, wherein: a respective processor of the plurality of processors is associated with a first translation cache and one or more filters corresponding to the first translation cache; the one or more filters include: a global identifier filter that is indicative of one or more global entries stored in the first translation cache; and an address space identifier filter that is indicative of one or more address spaces for which at least one entry is stored in the first translation cache; and the respective processor is configured to: receive a translation invalidation instruction corresponding to a request to invalidate one or more entries in the first translation cache that are associated with a first virtual address identifier and a first address space identifier; and in response to receiving the translation invalidation instruction: in accordance with a determination that the translation invalidation instruction satisfies translation invalidation filtering criteria, wherein the translation invalidation filtering criteria are satisfied in accordance with a determination that the global identifier filter indicates that the first translation cache does not store a global entry associated with the first virtual address identifier and in accordance with a determination that the address space identifier filter indicates that the first translation cache does not store an entry corresponding to the first address space identifier, forgo executing the translation invalidation instruction; and in accordance with a determination that the translation invalidation instruction does not satisfy the translation invalidation filtering criteria, execute the translation invalidation instruction on the first translation cache.
Clause 26. The electronic device of clause 25, wherein the global identifier filter indicates that the first translation cache does not store a global entry associated with the first virtual address identifier by indicating that the first translation cache does not store any global entry.
Clause 27. The electronic device of any of clauses 25-26, wherein determining that the translation invalidation instruction does not satisfy the translation invalidation filtering criteria includes determining that the global identifier filter indicates that the first translation cache stores one or more global entries.
Clause 28. The electronic device of any of clauses 25-26, wherein determining that the translation invalidation instruction does not satisfy the translation invalidation filtering criteria includes determining that the global identifier filter indicates that the first translation cache stores a global entry associated with the first virtual address identifier.
Clause 29. The electronic device of any of clauses 25-28, wherein executing the translation invalidation instruction on the first translation cache includes, in accordance with a determination that a respective page storing the first virtual address identifier is not a splintered page, executing the translation invalidation instruction within a respective set, identified by the translation invalidation instruction, of the respective translation cache.
Clause 30. The electronic device of any of clauses 25-29, wherein the one or more filters corresponding to the first translation cache include one or more splinter filters corresponding to a plurality of sectors of the first translation cache, and executing the translation invalidation instruction on the first translation cache includes, in accordance with a determination that a respective page storing the first virtual address identifier is a splintered page: querying the one or more splinter filters to identify a subset of sectors, of the plurality of sectors, that store the respective page storing the first virtual address identifier; and executing the translation invalidation instruction on the identified subset of sectors.
Clause 31. The electronic device of clause 30, wherein the respective processor is configured to, in combination with executing the translation invalidation instruction on a respective sector of the plurality of sectors, regenerate a respective splinter filter, of the one or more splinter filters, that corresponds to the respective sector.
Clause 32. The electronic device of any of clauses 25-31, wherein the respective processor is configured to, in combination with executing the translation invalidation instruction on the first translation cache, regenerate the global identifier filter.
Clause 33. The electronic device of any of clauses 25-32, wherein the one or more filters include a virtual machine identifier filter corresponding to the first translation cache, and the translation invalidation filtering criteria are satisfied in accordance with a determination that the virtual machine identifier filter indicates that the first translation cache does not store an entry corresponding to the first virtual machine identifier.
Clause 34. The electronic device of any of clauses 25-33, wherein a global entry associated with the first virtual address identifier is a cache entry that is associated with the first virtual address identifier without regard to an address space identifier.
Clause 35. A non-transitory computer readable storage medium, storing one or more programs configured for execution by an electronic device that comprises a plurality of processors configured to execute one or more virtual machines, wherein a respective processor of the plurality of processors is associated with a first translation cache and one or more filters corresponding to the first translation cache, the one or more filters include a global identifier filter that is indicative of one or more global entries stored in the first translation cache, and an address space identifier filter that is indicative of one or more address spaces for which at least one entry is stored in the first translation cache, the one or more programs including instructions that when executed by the respective processor, cause the respective processor to: receive a translation invalidation instruction corresponding to a request to invalidate one or more entries in the first translation cache that are associated with a first virtual address identifier and a first address space identifier; and in response to receiving the translation invalidation instruction: in accordance with a determination that the translation invalidation instruction satisfies translation invalidation filtering criteria, wherein the translation invalidation filtering criteria are satisfied in accordance with a determination that the global identifier filter indicates that the first translation cache does not store a global entry associated with the first virtual address identifier and in accordance with a determination that the address space identifier filter indicates that the first translation cache does not store an entry corresponding to the first address space identifier, forgo executing the translation invalidation instruction; and in accordance with a determination that the translation invalidation instruction does not satisfy the translation invalidation filtering criteria, execute the translation invalidation instruction on the first translation cache.
Clause 36. The non-transitory computer readable storage medium of clause 35, wherein the global identifier filter indicates that the first translation cache does not store a global entry associated with the first virtual address identifier by indicating that the first translation cache does not store any global entry.
Clause 37. The non-transitory computer readable storage medium of any of clauses 35-36, wherein determining that the translation invalidation instruction does not satisfy the translation invalidation filtering criteria includes determining that the global identifier filter indicates that the first translation cache stores a global entry associated with the first virtual address identifier.
Clause 38. The non-transitory computer readable storage medium of any of clauses 35-37, wherein executing the translation invalidation instruction on the first translation cache includes, in accordance with a determination that a respective page storing the first virtual address identifier is not a splintered page, executing the translation invalidation instruction within a respective set, identified by the translation invalidation instruction, of the respective translation cache.
Clause 39. The non-transitory computer readable storage medium of any of clauses 35-38, wherein the one or more filters corresponding to the first translation cache include one or more splinter filters corresponding to a plurality of sectors of the first translation cache, and executing the translation invalidation instruction on the first translation cache includes, in accordance with a determination that a respective page storing the first virtual address identifier is a splintered page: querying the one or more splinter filters to identify a subset of sectors, of the plurality of sectors, that store the respective page storing the first virtual address identifier; and executing the translation invalidation instruction on the identified subset of sectors.
Clause 40. The non-transitory computer readable storage medium of clause 39, wherein the one or more programs include instructions that, when executed by the respective processor, cause the respective processor to, in combination with executing the translation invalidation instruction on a respective sector of the plurality of sectors, regenerate a respective splinter filter, of the one or more splinter filters, that corresponds to the respective sector.
Clause 41. The non-transitory computer readable storage medium of any of clauses 35-40, wherein the one or more programs include instructions that, when executed by the respective processor, cause the respective processor to, in combination with executing the translation invalidation instruction on the first translation cache, regenerate the global identifier filter.
Clause 42. A method executed at an electronic device that comprises a plurality of processors configured to execute one or more virtual machines and memory for storing one or more programs, wherein a respective processor of the plurality of processors is associated with a first translation cache and one or more filters corresponding to the first translation, and the one or more filters include a global identifier filter that is indicative of one or more global entries stored in the first translation cache, and an address space identifier filter that is indicative of one or more address spaces for which at least one entry is stored in the first translation cache, and the one or more programs including instructions that when executed by the respective processor, the method comprising: receiving a translation invalidation instruction corresponding to a request to invalidate one or more entries in the first translation cache that are associated with a first virtual address identifier and a first address space identifier; and in response to receiving the translation invalidation instruction: in accordance with a determination that the translation invalidation instruction satisfies translation invalidation filtering criteria, wherein the translation invalidation filtering criteria are satisfied in accordance with a determination that the global identifier filter indicates that the first translation cache does not store a global entry associated with the first virtual address identifier and in accordance with a determination that the address space identifier filter indicates that the first translation cache does not store an entry corresponding to the first address space identifier, forgoing executing the translation invalidation instruction; and in accordance with a determination that the translation invalidation instruction does not satisfy the translation invalidation filtering criteria, executing the translation invalidation instruction on the first translation cache.
Clause 43. The method of clause 42, wherein the global identifier filter indicates that the first translation cache does not store a global entry associated with the first virtual address identifier by indicating that the first translation cache does not store any global entry.
Clause 44. The method of any of clauses 42-43, wherein determining that the translation invalidation instruction does not satisfy the translation invalidation filtering criteria includes determining that the global identifier filter indicates that the first translation cache stores a global entry associated with the first virtual address identifier.
Clause 45. The method of any of clauses 42-44, wherein executing the translation invalidation instruction on the first translation cache includes, in accordance with a determination that a respective page storing the first virtual address identifier is not a splintered page, executing the translation invalidation instruction within a respective set, identified by the translation invalidation instruction, of the respective translation cache.
Clause 46. The method of any of clauses 42-45, wherein the one or more filters corresponding to the first translation cache include one or more splinter filters corresponding to a plurality of sectors of the first translation cache, and executing the translation invalidation instruction on the first translation cache includes, in accordance with a determination that a respective page storing the first virtual address identifier is a splintered page: querying the one or more splinter filters to identify a subset of sectors, of the plurality of sectors, that store the respective page storing the first virtual address identifier; and executing the translation invalidation instruction on the identified subset of sectors.
Clause 47. The method of clause 46, including, in combination with executing the translation invalidation instruction on a respective sector of the plurality of sectors, regenerating a respective splinter filter, of the one or more splinter filters, that corresponds to the respective sector.
Clause 48. The method of any of clauses 42-47, including, in combination with executing the translation invalidation instruction on the first translation cache, regenerating the global identifier filter.
Clause 49. An apparatus for cache translation at an electronic device that includes a first processing cluster having a plurality of processors, and a cache coupled to the one or more processors in the first processing cluster and storing a plurality of data entries, wherein a respective processor of the plurality of processors is associated with a first translation cache and one or more filters corresponding to the first translation cache, and the one or more filters include a virtual machine identifier filter, the apparatus comprising means for performing operations of any of the methods in clauses 18-24.
Clause 50. An apparatus for cache translation at an electronic device that comprises a plurality of processors configured to execute one or more virtual machines and memory for storing one or more programs, wherein a respective processor of the plurality of processors is associated with a first translation cache and one or more filters corresponding to the first translation, and the one or more filters include a global identifier filter that is indicative of one or more global entries stored in the first translation cache, and an address space identifier filter that is indicative of one or more address spaces for which at least one entry is stored in the first translation cache, and the one or more programs including instructions that when executed by the respective processor, the apparatus comprising means for performing operations of any of the methods in clauses 42-48.

The above description has been provided with reference to specific implementations. However, the illustrative discussions above are not intended to be exhaustive or to be limiting to the precise forms disclosed. Many modifications and variations are possible in view of the above teachings. The implementations were chosen and described in order to best explain the principles disclosed and their practical applications, to thereby enable others to best utilize the disclosure and various implementations with various modifications as are suited to the particular use contemplated.

The terminology used in the description of the various described implementations herein is for the purpose of describing particular implementations only and is not intended to be limiting. As used in the description of the various described implementations and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. Additionally, it will be understood that, although the terms "first," "second," etc. may be used herein to describe various elements, these elements should not be limited by these terms. These terms are only used to distinguish one element from another.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

Although various drawings illustrate a number of logical stages in a particular order, stages that are not order dependent may be reordered and other stages may be combined or broken out. While some reordering or other groupings are specifically mentioned, others will be obvious to those of ordinary skill in the art, so the ordering and groupings presented herein are not an exhaustive list of alternatives. Moreover, it should be recognized that the stages can be implemented in hardware, firmware, software or any combination thereof.

## Claims

1. An electronic device (200), comprising:
a plurality of processors (204-1...204N; 206-1...206N') configured to execute one or more virtual machines (320-1...320-m), wherein a respective processor of the plurality of processors (204-1...204N; 206-1...206N') is associated with a first translation cache (212-1) and one or more filters (232-1) corresponding to the first translation cache (212-1), the one or more filters (232-1) include a virtual machine identifier filter, and the respective processor is configured to:
receive a translation invalidation instruction corresponding to a request to invalidate one or more entries in the first translation cache; and
in accordance with a determination that the translation invalidation instruction satisfies translation invalidation filtering criteria that include a requirement that the translation invalidation instruction specifies a respective virtual machine identifier:
query the virtual machine identifier filter associated with the first translation cache to determine whether the respective virtual machine identifier is stored in the virtual machine identifier filter; and
in accordance with a determination that the virtual machine identifier filter indicates that the respective virtual machine identifier is not stored in the virtual machine identifier filter, forgo executing the translation invalidation instruction, **characterized by**:
the one or more filters corresponding to the first translation cache include one or more splinter filters, and the respective processor is configured to:
in accordance with the determination that the translation invalidation instruction satisfies the translation invalidation filtering criteria, wherein the translation invalidation filtering criteria further include a requirement that the translation invalidation instruction specifies a respective virtual address identifier:
query the one or more splinter filters associated with the first translation cache to determine whether a respective page storing the respective virtual address identifier is splintered across multiple sectors of the respective translation cache; and
in accordance with a determination that the respective page storing the respective virtual address identifier is splintered across multiple sectors of the respective translation cache, execute the translation invalidation instruction at the multiple sectors of the respective translation cache.

2. The electronic device (200) of claim 1, wherein the respective processor is configured to:
in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective virtual machine identifier:
in accordance with a determination that the virtual machine identifier filter indicates that the respective virtual machine identifier is stored in the virtual machine identifier filter:
execute the translation invalidation instruction on the first translation cache.

3. The electronic device (200) of claim 2, wherein the respective processor is configured to:
while executing the translation invalidation instruction on the first translation cache, regenerate the one or more filters.

4. The electronic device (200) of claim 3, wherein regenerating the one or more filters includes removing, from the virtual machine identifier filter, an indication that the respective virtual machine identifier is stored in the virtual machine identifier filter.

5. The electronic device (200) of claim 1, wherein the one or more filters (232-1) corresponding to the first translation cache (212-1) include an address space identifier filter, and the respective processor is configured to:
in accordance with the determination that the translation invalidation instruction satisfies the translation invalidation filtering criteria, wherein the translation invalidation filtering criteria further include a requirement that the translation invalidation instruction specifies a respective address space identifier:
query the address space identifier filter associated with the first translation cache to determine whether the respective address space identifier is stored in the address space identifier filter; and
in accordance with a determination that the respective address space identifier is not stored in the address space identifier filter, forgo executing the translation invalidation instruction.

6. The electronic device (200) of claim 5, wherein the respective processor is configured to:
in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective address space identifier:
in accordance with a determination that the address space identifier filter indicates that the respective address space identifier is stored in the address space identifier filter and a determination that the virtual machine identifier filter indicates that the respective virtual machine identifier is stored in the virtual machine identifier filter:
execute the translation invalidation instruction on the first translation cache.

7. The electronic device (200) of claim 1, wherein the respective processor is configured to:
in accordance with the determination that the translation invalidation instruction satisfies the translation invalidation filtering criteria:
in accordance with a determination that the respective page storing the respective virtual address identifier is not splintered across multiple sectors of the respective translation cache, executing the translation invalidation instruction within an identified sector of the respective translation cache.

8. The electronic device (200) of claim 1, wherein the one or more filters includes a bloom filter.

9. The electronic device (200) of claim 1, wherein:
the respective processor of the plurality of processors is associated with a second translation cache and one or more second filters corresponding to the second translation cache;
the second translation cache corresponds to a cache level that is different from a cache level of the first translation cache; and
the one or more second filters are distinct from the one or more filters associated with the first translation cache.

10. A method (500) executed at an electronic device (200) that includes a first processing cluster (202-1) having a plurality of processors (204-1...204N), and a cache coupled to the plurality of processors (204-1...204-N) in the first processing cluster (202-1) and storing a plurality of data entries, wherein a respective processor of the plurality of processors is associated with a first translation cache (212-1) and one or more filters (232-1) corresponding to the first translation cache (212-1) , and the one or more filters (232-1) include a virtual machine identifier filter, the method comprising:
receiving (510) a translation invalidation instruction corresponding to a request to invalidate one or more entries in the first translation cache; and
in accordance with a determination that the translation invalidation instruction satisfies translation invalidation filtering criteria that include a requirement that the translation invalidation instruction specifies a respective virtual machine identifier:
querying (530) the virtual machine identifier filter associated with the first translation cache to determine whether the respective virtual machine identifier is stored in the virtual machine identifier filter; and
in accordance with a determination that the virtual machine identifier filter indicates that the respective virtual machine identifier is not stored in the virtual machine identifier filter, forgoing executing the translation invalidation instruction,
**characterized by**:
the one or more filters corresponding to the first translation cache include one or more splinter filters, the method further comprising:
in accordance with the determination that the translation invalidation instruction satisfies the translation invalidation filtering criteria, wherein the translation invalidation filtering criteria further include a requirement that the translation invalidation instruction specifies a respective virtual address identifier:
querying the one or more splinter filters associated with the first translation cache to determine whether a respective page storing the respective virtual address identifier is splintered across multiple sectors of the respective translation cache; and
in accordance with a determination that the respective page storing the respective virtual address identifier is splintered across multiple sectors of the respective translation cache, executing the translation invalidation instruction at the multiple sectors of the respective translation cache.

11. The method (500) of claim 10, the method further comprising:
in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective virtual machine identifier:
in accordance with a determination that the virtual machine identifier filter indicates that the respective virtual machine identifier is stored in the virtual machine identifier filter:
executing (554) the translation invalidation instruction on the first translation cache.

12. The method (500) of claim 11, the method further comprising:
while executing the translation invalidation instruction on the first translation cache, regenerating the one or more filters.

13. The method (500) of claim 10, wherein the one or more filters corresponding to the first translation cache include an address space identifier filter, the method further comprising:
in accordance with the determination that the translation invalidation instruction satisfies the translation invalidation filtering criteria, wherein the translation invalidation filtering criteria further include a requirement that the translation invalidation instruction specifies a respective address space identifier:
querying the address space identifier filter associated with the first translation cache to determine whether the respective address space identifier is stored in the address space identifier filter; and
in accordance with a determination that the respective address space identifier is not stored in the address space identifier filter, forgoing executing the translation invalidation instruction, the method further comprising:
in accordance with the determination that the translation invalidation instruction satisfies the translation invalidation filtering criteria, wherein the translation invalidation filtering criteria further include a requirement that the translation invalidation instruction corresponds to a request to invalidate translation information associated with the respective address space identifier:
in accordance with a determination that the address space identifier filter indicates that the respective address space identifier is stored in the address space identifier filter and a determination that the virtual machine identifier filter indicates that the respective virtual machine identifier is stored in the virtual machine identifier filter:
executing the translation invalidation instruction on the first translation cache.

14. The method (500) of claim 10, the method further comprising:
in accordance with the determination that the translation invalidation instruction satisfies the translation invalidation filtering criteria:
in accordance with a determination that the respective page storing the respective virtual address identifier is not splintered across multiple sectors of the respective translation cache, executing the translation invalidation instruction within an identified sector of the respective translation cache.

15. A non-transitory computer readable storage medium, storing one or more programs configured for execution by an electronic device (200) that comprises a plurality of processors (204-1...204N; 206-1...206N') configured to execute one or more virtual machines, wherein a respective processor of the plurality of processors is associated with a first translation cache and one or more filters corresponding to the first translation cache, the one or more filters include a virtual machine identifier filter, and the one or more programs including instructions that when executed by the respective processor, cause the respective processor to perform the method of any one of claims 10 to 14.

## Patentansprüche

1. Ein elektronisches Gerät (200), aufweisend:
eine Vielzahl von Prozessoren (204-1 ... 204N; 206-1 ... 206N'), die konfiguriert sind zum Ausführen einer oder mehrerer virtueller Maschinen (320-1 ... 320-m), wobei ein entsprechender Prozessor aus der Vielzahl von Prozessoren (204-1 ... 204N; 206-1 ... 206N') mit einem ersten Übersetzungscache (212-1) und einem oder mehreren Filtern (232-1) in Entsprechung zu dem ersten Übersetzungscache (212-1) assoziiert ist, wobei das eine oder die mehreren Filter (232-1) ein Virtuelle-Maschine-Identifizierer-Filter umfassen und wobei der entsprechende Prozessor konfiguriert ist zum:
Empfangen eines Übersetzungsannullierungsbefehls in Entsprechung zu einer Anfrage für das Annullieren eines oder mehrerer Einträge in dem ersten Übersetzungscache, und
gemäß einer Bestimmung, dass der Übersetzungsannullierungsbefehl Übersetzungsannullierungs-Filterkriterien erfüllt, die eine Anforderung, dass der Übersetzungsannullierungsbefehl einen entsprechenden Virtuelle-Maschine-Identifizierer spezifiziert, enthalten:
Abfragen des mit dem ersten Übersetzungscache assoziierten Virtuelle-Maschine-Identifizierer-Filters, um zu bestimmen, ob der entsprechende Virtuelle-Maschine-Identifizierer in dem Virtuelle-Maschine-Identifizierer-Filter gespeichert ist, und
gemäß einer Bestimmung, dass das Virtuelle-Maschine-Identifizierer-Filter angibt, dass der entsprechende Virtuelle-Maschine-Identifizierer nicht in dem Virtuelle-Maschine-Identifizierer-Filter gespeichert ist, Verzichten auf das Ausführen des Übersetzungsannullierungsbefehls,
**dadurch gekennzeichnet, dass**:
das eine oder die mehreren Filter in Entsprechung zu dem ersten Übersetzungscache ein oder mehrere Verteilungsfilter umfassen und der entsprechende Prozessor konfiguriert ist zum:
gemäß der Bestimmung, dass der Übersetzungsannullierungsbefehl die Übersetzungsannullierungs-Filterkriterien erfüllt, wobei die Übersetzungsannullierungs-Filterkriterien weiterhin eine Anforderung, dass der Übersetzungsannullierungsbefehl einen entsprechenden Virtuelle-Adresse-Identifizierer spezifiziert, enthalten:
Abfragen des einen oder der mehreren mit dem ersten Übersetzungscache assoziierten Verteilungsfilter, um zu bestimmen, ob eine entsprechende Seite, die den entsprechenden Virtuelle-Adresse-Identifizierer speichert, über mehrere Sektoren des entsprechenden Übersetzungscaches verteilt ist, und
gemäß einer Bestimmung, dass die entsprechende Seite, die den entsprechenden Virtuelle-Adresse-Identifizierer speichert, über mehrere Sektoren des entsprechenden Übersetzungscaches verteilt ist, Ausführen des Übersetzungsannullierungsbefehles an den mehreren Sektoren des entsprechenden Übersetzungscaches.

2. Elektronisches Gerät (200) nach Anspruch 1, wobei der entsprechende Prozessor konfiguriert ist zum:
gemäß der Bestimmung, dass der Übersetzungsannullierungsbefehl die Übersetzungsannullierung-Filterkriterien erfüllt, wobei die Übersetzungsannullierung-Filterkriterien weiterhin eine Anforderung, dass der Übersetzungsannullierungsbefehl einer Anfrage für das Annullieren von mit dem entsprechenden Virtuelle-Maschine-Identifizierer assoziierten Übersetzungsinformationen entspricht, enthalten:
gemäß einer Bestimmung, dass das Virtuelle-Maschine-Identifizierer-Filter angibt, dass der entsprechende Virtuelle-Maschine-Identifizierer in dem Virtuelle-Maschine-Identifizierer-Filter gespeichert ist:
Ausführen des Übersetzungsannullierungsbefehls auf dem ersten Übersetzungscache.

3. Elektronisches Gerät (200) nach Anspruch 2, wobei der entsprechende Prozessor konfiguriert ist zum:
während des Ausführens des Übersetzungsannullierungsbefehls auf dem ersten Übersetzungscache, Regenerieren des einen oder der mehreren Filter.

4. Elektronisches Gerät (200) nach Anspruch 3, wobei das Regenerieren des einen oder der mehreren Filter das Entfernen, aus dem Virtuelle-Maschine-Identifizierer-Filter, einer Angabe, dass der entsprechende Virtuelle-Maschine-Identifizierer in dem Virtuelle-Maschine-Identifizierer-Filter gespeichert ist, umfasst.

5. Elektronisches Gerät (200) nach Anspruch 1, wobei das eine oder die mehreren Filter (232-1) in Entsprechung zu dem ersten Übersetzungscache (212-1) einen Adressraum-Identifizierer-Filter umfassen und der entsprechende Prozessor konfiguriert ist zum:
gemäß der Bestimmung, dass der Übersetzungsannullierungsbefehl die Übersetzungsannullierung-Filterkriterien erfüllt, wobei die Übersetzungsannullierung-Filterkriterien weiterhin eine Anforderung, dass der Übersetzungsannullierungsbefehl einen entsprechenden Adressraum-Identifizierer spezifiziert, enthalten:
Abfragen des mit dem ersten Übersetzungscache assoziierten Adressraum-Identifizierer-Filters, um zu bestimmen, ob der entsprechende Adressraum-Identifizierer in dem Adressraum-Identifizierer-Filter gespeichert ist, und
gemäß einer Bestimmung, dass der entsprechende Adressraum-Identifizierer nicht in dem Adressraum-Identifizierer-Filter gespeichert ist, Verzichten auf das Ausführen des Übersetzungsannullierungsbefehls.

6. Elektronisches Gerät (200) nach Anspruch 5, wobei der entsprechende Prozessor konfiguriert ist zum:
gemäß der Bestimmung, dass der Übersetzungsannullierungsbefehl die Übersetzungsannullierung-Filterkriterien erfüllt, wobei die Übersetzungsannullierung-Filterkriterien weiterhin eine Anforderung, dass der Übersetzungsannullierungsbefehl einer Anfrage für das Annullieren von mit dem entsprechenden Adressraum-Identifizierer assoziierten Übersetzungsinformationen entspricht, enthalten:
gemäß einer Bestimmung, dass das Adressraum-Identifizierer-Filter angibt, dass der entsprechende Adressraum-Identifizierer in dem Adressraum-Identifizierer-Filter gespeichert ist, und einer Bestimmung, dass das Virtuelle-Maschine-Identifizierer-Filter angibt, dass der entsprechende Virtuelle-Maschine-Identifizierer in dem Virtuelle-Maschine-Identfizierer-Filter gespeichert ist:
Ausführen des Übersetzungsannullierungsbefehls auf dem ersten Übersetzungscache.

7. Elektronisches Gerät (200) nach Anspruch 1, wobei der entsprechende Prozessor konfiguriert ist zum:
gemäß der Bestimmung, dass der Übersetzungsannullierungsbefehl die Übersetzungsannullierung-Filterkriterien erfüllt:
gemäß einer Bestimmung, dass die entsprechende Seite, die den entsprechenden Virtuelle-Adresse-Identifizierer speichert, nicht über mehrere Sektoren des entsprechenden Übersetzungscaches verteilt ist, Ausführen des Übersetzungsannullierungsbefehls in einem identifizierten Sektor des entsprechenden Übersetzungscaches.

8. Elektronisches Gerät (200) nach Anspruch 1, wobei das eine oder die mehreren Filter ein Bloomfilter umfassen.

9. Elektronisches Gerät (200) nach Anspruch 1, wobei:
der entsprechende Prozessor aus der Vielzahl von Prozessoren mit einem zweiten Übersetzungscache und mit einem oder mehreren zweiten Filtern in Entsprechung zu dem zweiten Übersetzungscache assoziiert ist,
der zweite Übersetzungscache einer Cacheebene, die von der Cacheebene des ersten Übersetzungscaches verschieden ist, entspricht, und
das eine oder die mehreren zweiten Filter von dem einen oder den mehreren mit dem ersten Übersetzungscache assoziierten Filtern verschieden sind.

10. Ein Verfahren (500), das an einem elektronischen Gerät (200) ausgeführt wird, das ein erstes Verarbeitungscluster (202-1), das eine Vielzahl von Prozessoren (204-1 ... 204-N) aufweist, und einen Cache, der mit der Vielzahl von Prozessoren (204-1 ... 204-N) in dem ersten Verarbeitungscluster (202-1) gekoppelt ist und eine Vielzahl von Dateneinträgen speichert, enthält, wobei ein entsprechender Prozessor aus der Vielzahl von Prozessoren mit einem ersten Übersetzungscache (212-1) und einem oder mehreren Filtern (232-1) in Entsprechung zu dem ersten Übersetzungscache (212-1) assoziiert ist und das eine oder die mehreren Filter (232-1) ein Virtuelle-Maschine-Identifizierer-Filter umfassen, wobei das Verfahren aufweist:
Empfangen (510) eines Übersetzungsannullierungsbefehls in Entsprechung zu einer Anfrage für das Annullieren eines oder mehrerer Einträge in dem ersten Übersetzungscache, und
gemäß einer Bestimmung, dass der Übersetzungsannullierungsbefehl Übersetzungsannullierungs-Filterkriterien erfüllt, die eine Anforderung, dass der Übersetzungsannullierungsbefehl einen entsprechenden Virtuelle-Maschine-Identifizierer spezifiziert, enthalten,
Abfragen (530) des mit dem ersten Übersetzungscache assoziierten Virtuelle-Maschine-Identifizierer-Filters, um zu bestimmen, ob der entsprechende Virtuelle-Maschine-Identifizierer in dem Virtuelle-Maschine-Identifizierer-Filter gespeichert ist, und
gemäß einer Bestimmung, dass das Virtuelle-Maschine-Identifizierer-Filter angibt, dass der entsprechende Virtuelle-Maschine-Identifizierer nicht in dem Virtuelle-Maschine-Identifizierer-Filter gespeichert ist, Verzichten auf das Ausführen des Übersetzungsannullierungsbefehls,
**dadurch gekennzeichnet, dass**:
das eine oder die mehreren Filter in Entsprechung zu dem ersten Übersetzungscache ein oder mehrere Verteilungsfilter umfassen und das Verfahren weiterhin aufweist:
gemäß der Bestimmung, dass der Übersetzungsannullierungsbefehl die Übersetzungsannullierungs-Filterkriterien erfüllt, wobei die Übersetzungsannullierungs-Filterkriterien weiterhin eine Anforderung, dass der Übersetzungsannullierungsbefehl einen entsprechenden Virtuelle-Adresse-Identifizierer spezifiziert, enthalten:
Abfragen des einen oder der mehreren mit dem ersten Übersetzungscache assoziierten Verteilungsfilter, um zu bestimmen, ob eine entsprechende Seite, die den entsprechenden Virtuelle-Adresse-Identifizierer speichert, über mehrere Sektoren des entsprechenden Übersetzungscaches verteilt ist, und
gemäß einer Bestimmung, dass die entsprechende Seite, die den entsprechenden Virtuelle-Adresse-Identifizierer speichert, über mehrere Sektoren des entsprechenden Übersetzungscaches verteilt ist, Ausführen des Übersetzungsannullierungsbefehles an den mehreren Sektoren des entsprechenden Übersetzungscaches.

11. Verfahren (500) nach Anspruch 10, wobei das Verfahren weiterhin aufweist:
gemäß der Bestimmung, dass der Übersetzungsannullierungsbefehl die Übersetzungsannullierung-Filterkriterien erfüllt, wobei die Übersetzungsannullierung-Filterkriterien weiterhin eine Anforderung, dass der Übersetzungsannullierungsbefehl einer Anfrage für das Annullieren von mit dem entsprechenden Virtuelle-Maschine-Identifizierer assoziierten Übersetzungsinformationen entspricht, enthalten:
gemäß einer Bestimmung, dass das Virtuelle-Maschine-Identifizierer-Filter angibt, dass der entsprechende Virtuelle-Maschine-Identifizierer in dem Virtuelle-Maschine-Identifizierer-Filter gespeichert ist:
Ausführen (554) des Übersetzungsannullierungsbefehls auf dem ersten Übersetzungscache.

12. Verfahren (500) nach Anspruch 11, wobei das Verfahren weiterhin aufweist:
während des Ausführens des Übersetzungsannullierungsbefehls auf dem ersten Übersetzungscache, Regenerieren des einen oder der mehreren Filter.

13. Verfahren (500) nach Anspruch 10, wobei das eine oder die mehreren Filter in Entsprechung zu dem ersten Übersetzungscache einen Adressraum-Identifizierer-Filter umfassen und das Verfahren weiterhin aufweist:
gemäß der Bestimmung, dass der Übersetzungsannullierungsbefehl die Übersetzungsannullierung-Filterkriterien erfüllt, wobei die Übersetzungsannullierung-Filterkriterien weiterhin eine Anforderung, dass der Übersetzungsannullierungsbefehl einen entsprechenden Adressraum-Identifizierer spezifiziert, enthalten:
Abfragen des mit dem ersten Übersetzungscache assoziierten Adressraum-Identifizierer-Filters, um zu bestimmen, ob der entsprechende Adressraum-Identifizierer in dem Adressraum-Identifizierer-Filter gespeichert ist, und
gemäß einer Bestimmung, dass der entsprechende Adressraum-Identifizierer nicht in dem Adreessraum-Identifizierer-Filter gespeichert ist, Verzichten auf das Ausführen des Übersetzungsannullierungsbefehls, wobei das Verfahren weiterhin aufweist:
gemäß der Bestimmung, dass der Übersetzungsannullierungsbefehl die Übersetzungsannullierung-Filterkriterien erfüllt, wobei die Übersetzungsannullierung-Filterkriterien weiterhin eine Anforderung, dass der Übersetzungsannullierungsbefehl einer Anfrage für das Annullieren von mit dem entsprechenden Adressraum-Identifizierer assoziierten Übersetzungsinformationen entspricht, enthalten:
gemäß einer Bestimmung, dass das Adressraum-Identifizierer-Filter angibt, dass der entsprechende Adressraum-Identifizierer in dem Adressraum-Identifizierer-Filter gespeichert ist, und einer Bestimmung, dass das Virtuelle-Maschine-Identifizierer-Filter angibt, dass der entsprechende Virtuelle-Maschine-Identifizierer in dem Virtuelle-Maschine-Identfizierer-Filter gespeichert ist:
Ausführen des Übersetzungsannullierungsbefehls auf dem ersten Übersetzungscache.

14. Verfahren (500) nach Anspruch 10, wobei das Verfahren weiterhin aufweist:
gemäß der Bestimmung, dass der Übersetzungsannullierungsbefehl die Übersetzungsannullierung-Filterkriterien erfüllt:
gemäß einer Bestimmung, dass die entsprechende Seite, die den entsprechenden Virtuelle-Adresse-Identifizierer speichert, nicht über mehrere Sektoren des entsprechenden Übersetzungscaches verteilt ist, Ausführen des Übersetzungsannullierungsbefehls in einem identifizierten Sektor des entsprechenden Übersetzungscaches.

15. Ein nicht-transitorisches, computerlesbares Speichermedium, das ein oder mehrere Programme speichert, die für eine Ausführung durch ein elektronisches Gerät (200) konfiguriert sind, das eine Vielzahl von Prozessoren (204-1 ... 204N; 206-1 ... 206N') aufweist, die konfiguriert sind zum Ausführen einer oder mehrerer virtueller Maschinen, wobei ein entsprechender Prozessor aus der Vielzahl von Prozessoren mit einem ersten Übersetzungscache und einem oder mehreren Filtern in Entsprechung zu dem ersten Übersetzungscache assoziiert ist, wobei das eine oder die mehreren Filter ein Virtuelle-Maschine-Identifizierer-Filter umfassen und das eine oder die mehreren Programme Befehle enthalten, die bei einer Ausführung durch den entsprechenden Prozessor den entsprechenden Prozessor veranlassen zum Durchführen des Verfahrensgemäß einem der Ansprüche 10 bis 14.

## Revendications

1. Dispositif électronique (200), comprenant :
une pluralité de processeurs (204-1 ...204-N ; 206-1 ...206-N') configurés pour exécuter une ou plusieurs machines virtuelles (320-1 ...320-m), dans lequel un processeur respectif parmi la pluralité de processeurs (204-1 ...204-N ; 206-1 ...206-N') est associée à un premier cache de traduction (212-1) et à un ou plusieurs filtres (232-1) correspondant au premier cache de traduction (212-1), les un ou plusieurs filtres (232-1) comportent un filtre d'identifiants de machine virtuelle, et le processeur respectif est configuré pour :
recevoir une instruction d'invalidation de traduction correspondant à une requête d'invalidation d'une ou de plusieurs entrées du premier cache de traduction ; et,
conformément à une détermination selon laquelle l'instruction d'invalidation de traduction satisfait à des critères de filtrage d'invalidation de traduction qui comportent une exigence selon laquelle l'instruction d'invalidation de traduction spécifie un identifiant de machine virtuelle respectif :
interroger le filtre d'identifiants de machine virtuelle associé au premier cache de traduction pour déterminer si l'identifiant de machine virtuelle respectif est stocké dans le filtre d'identifiants de machine virtuelle ; et
conformément à une détermination selon laquelle le filtre d'identifiants de machine virtuelle indique que l'identifiant de machine virtuelle respectif n'est pas stocké dans le filtre d'identifiants de machine virtuelle, renoncer à exécuter l'instruction d'invalidation de traduction,
**caractérisé en ce que** :
les un ou plusieurs filtres correspondant au premier cache de traduction comportent un ou plusieurs filtres de fragmentation, et le processeur respectif est configuré pour :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de traduction spécifie un identifiant d'espace d'adressage respectif :
interroger les un ou plusieurs filtres de fragmentation associés au premier cache de traduction pour déterminer si une page respective stockant l'identifiant d'espace d'adressage respectif est fragmentée entre plusieurs secteurs du cache de traduction respectif identifiant ; et
conformément à une détermination selon laquelle la page respective stockant l'identifiant d'adresse virtuelle est fragmentée entre plusieurs secteurs du cache de traduction respectif, exécuter l'instruction d'invalidation de traduction sur les plusieurs secteurs du cache de traduction respectif.

2. Dispositif électronique (200) selon la revendication 1, dans lequel le processeur respectif est configuré pour :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de traduction correspond à une requête d'invalidation d'informations de traduction associées à l'identifiant de machine virtuelle respectif :
conformément à une détermination selon laquelle le filtre d'identifiants de machine virtuelle indique que l'identifiant de machine virtuelle respectif est stocké dans le filtre d'identifiants de machine virtuelle :
exécuter l'instruction d'invalidation de traduction sur le premier cache de traduction.

3. Dispositif électronique (200) selon la revendication 2, dans lequel le processeur respectif est configuré pour :
en même temps qu'exécuter l'instruction d'invalidation de la traduction sur le premier cache de traduction, régénérer les un ou plusieurs filtres.

4. Dispositif électronique (200) selon la revendication 3, dans lequel la régénération des un ou plusieurs filtres comporte la suppression, du filtre d'identifiants de machine virtuelle, d'une indication selon laquelle l'identifiant de machine virtuelle respectif est stocké dans le filtre d'identifiants de machine virtuelle.

5. Dispositif électronique (200) selon la revendication 1, dans lequel les un ou plusieurs filtres (232-1) correspondant au premier cache de traduction (212-1) comportent un filtre d'identifiants d'espace d'adressage, et le processeur respectif est configuré pour :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de traduction spécifie un identifiant d'espace d'adressage respectif :
interroger le filtre d'identifiants d'espace d'adressage associé au premier cache de traduction pour déterminer si l'identifiant d'espace d'adressage respectif est stocké dans le filtre d'identifiants d'espace d'adressage ; et
conformément à une détermination selon laquelle l'identifiant d'espace d'adressage respectif n'est pas stocké dans le filtre d'identifiants d'espace d'adressage, renoncer à exécuter l'instruction d'invalidation de traduction.

6. Dispositif électronique (200) selon la revendication 5, dans lequel le processeur respectif est configuré pour :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de traduction correspond à une requête d'invalidation des informations de traduction associées à l'identifiant d'espace d'adressage respectif :
conformément à une détermination selon laquelle le filtre d'identifiants d'espace d'adressage indique que l'identifiant d'espace d'adressage respectif est stocké dans le filtre d'identifiants d'espace d'adressage et à une détermination selon laquelle le filtre d'identifiants de machine virtuelle indique que l'identifiant de machine virtuelle respectif est stocké dans le filtre d'identifiants de machine virtuelle :
exécuter l'instruction d'invalidation de traduction sur le premier cache de traduction.

7. Dispositif électronique (200) selon la revendication 1, dans lequel le processeur respectif est configuré pour :
conformément à la détermination selon laquelle l'instruction d'invalidation de traduction satisfait aux critères de filtrage d'invalidation de traduction :
conformément à une détermination selon laquelle la page respective stockant l'identifiant d'adresse virtuelle respectif n'est pas fragmentée entre plusieurs secteurs du cache de traduction respectif, exécuter l'instruction d'invalidation de traduction dans un secteur identifié du cache de traduction respectif.

8. Dispositif électronique (200) selon la revendication 1, dans lequel les un ou plusieurs filtres comportent un filtre de Bloom.

9. Dispositif électronique (200) selon la revendication 1, dans lequel :
le processeur respectif parmi la pluralité de processeurs est associé à un deuxième cache de traduction et à un ou plusieurs deuxièmes filtres correspondant au deuxième cache de traduction ;
le deuxième cache de traduction correspond à un niveau de cache différent d'un niveau de cache du premier cache de traduction ; et
les un ou plusieurs deuxièmes filtres sont distincts des un ou plusieurs filtres associés au premier cache de traduction.

10. Procédé (500) exécuté au niveau d'un dispositif électronique (200) qui comporte un premier groupe de traitement (202-1) ayant une pluralité de processeurs (204-1 ...204-N) et un cache relié à la pluralité de processeurs (204-1 ...204-N) au sein du premier groupe de traitement (202-1) et stockant une pluralité d'entrées de données, dans lequel un processeur respectif parmi la pluralité de processeurs est associé à un premier cache de traduction (212-1) et à un ou plusieurs filtres (232-1) correspondant au premier cache de traduction (212-1), et les un ou plusieurs filtres (232-1) comportent un filtre d'identifiants de machine virtuelle, le procédé comprenant :
la réception (510) d'une instruction d'invalidation de traduction correspondant à une requête d'invalidation d'une ou de plusieurs entrées dans le premier cache de traduction ; et
conformément à une détermination selon laquelle l'instruction d'invalidation de traduction satisfait à des critères de filtrage d'invalidation de traduction qui comportent une exigence selon laquelle l'instruction d'invalidation de traduction spécifie un identifiant de machine virtuelle respectif :
l'interrogation (530) du filtre d'identifiants de machine virtuelle associé au premier cache de traduction pour déterminer si l'identifiant de machine virtuelle respectif est stocké dans le filtre d'identifiants de machine virtuelle ; et
conformément à une détermination selon laquelle le filtre d'identifiants de machine virtuelle indique que l'identifiant de machine virtuelle respectif n'est pas stocké dans le filtre d'identifiants de machine virtuelle, la renonciation à l'exécution de l'instruction d'invalidation de traduction,
**caractérisé en ce que** :
les un ou plusieurs filtres correspondant au premier cache de traduction comportent un ou plusieurs filtres de fragmentation, et le procédé comprend en outre :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de traduction spécifie un identifiant d'espace d'adressage respectif :
l'interrogation des un ou plusieurs filtres de fragmentation associés au premier cache de traduction pour déterminer si une page respective stockant l'identifiant d'espace d'adressage respectif est fragmentée entre plusieurs secteurs du cache de traduction respectif identifiant ; et
conformément à la détermination selon laquelle la page respective stockant l'identifiant d'adresse virtuelle est fragmentée entre plusieurs secteurs du cache de traduction respectif, l'exécution de l'instruction d'invalidation de traduction sur les plusieurs secteurs du cache de traduction respectif.

11. Procédé (500) selon la revendication 10, le procédé comprenant en outre :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de traduction correspond à une requête d'invalidation des informations de traduction associées à l'identifiant de machine virtuelle respectif :
conformément à une détermination selon laquelle le filtre d'identifiants de machine virtuelle indique que l'identifiant de machine virtuelle respectif est stocké dans le filtre d'identifiants de machine virtuelle :
l'exécution (554) de l'instruction d'invalidation de traduction sur le premier cache de traduction.

12. Procédé (500) selon la revendication 11, le procédé comprenant en outre :
en même temps que l'exécution de l'instruction d'invalidation de la traduction sur le premier cache de traduction, la régénération des un ou plusieurs filtres.

13. Procédé (500) selon la revendication 10, dans lequel les un ou plusieurs filtres correspondant au premier cache de traduction comportent un filtre d'identifiants d'espace d'adressage, le procédé comprenant en outre :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de la traduction spécifie un identifiant d'espace d'adressage respectif :
l'interrogation du filtre d'identifiants d'espace d'adressage associé au premier cache de traduction pour déterminer si l'identifiant d'espace d'adressage respectif est stocké dans le filtre d'identifiants d'espace d'adressage ; et,
conformément à une détermination selon laquelle l'identifiant d'espace d'adressage respectif n'est pas stocké dans le filtre d'identifiants d'espace d'adressage, l'abandon de l'exécution de l'instruction d'invalidation de la traduction, le procédé comprenant en outre :
conformément à la détermination selon laquelle l'instruction d'invalidation de traduction satisfait aux critères de filtrage d'invalidation de traduction, dans lequel les critères de filtrage d'invalidation de traduction comportent en outre une exigence selon laquelle l'instruction d'invalidation de traduction correspond à une requête d'invalidation des informations de traduction associées à l'identifiant d'espace d'adressage respectif :
conformément à une détermination selon laquelle le filtre d'identifiants d'espace d'adressage indique que l'identifiant d'espace d'adressage respectif est stocké dans le filtre d'identifiants d'espace d'adressage et à une détermination selon laquelle le filtre d'identifiants de machine virtuelle indique que l'identifiant de machine virtuelle respectif est stocké dans le filtre d'identifiants de machine virtuelle :
l'exécution de l'instruction d'invalidation de traduction sur le premier cache de traduction.

14. Procédé (500) selon la revendication 10, le procédé comprenant en outre :
conformément à la détermination selon laquelle l'instruction d'invalidation de traduction satisfait aux critères de filtrage d'invalidation de traduction :
conformément à une détermination selon laquelle la page respective stockant l'identifiant d'adresse virtuelle respectif n'est pas fragmentée entre plusieurs secteurs du cache de traduction respectif, l'exécution de l'instruction d'invalidation de traduction dans un secteur identifié du cache de traduction respectif.

15. Support de stockage non transitoire lisible par ordinateur, stockant un ou plusieurs programmes configurés pour être exécutés par un dispositif électronique (200) qui comprend une pluralité de processeurs (204-1 ...204 N ; 206-1 ...206 N') configurés pour exécuter une ou plusieurs machines virtuelles, dans lequel un processeur respectif parmi la pluralité de processeurs est associé à un premier cache de traduction et à un ou plusieurs filtres correspondant au premier cache de traduction, les un ou plusieurs filtres comportent un filtre d'identifiants de machine virtuelle et les un ou plusieurs programmes comportant des instructions qui, lorsqu'elles sont exécutées par le processeur respectif, amènent le processeur respectif à exécuter le procédé selon l'une quelconque des revendications 10 à 14.
